Europäisches Patentamt

European Patent Office

Office européen des brevets

(11) Publication number: **0 183 877**
**B1**

# EUROPEAN PATENT SPECIFICATION

(45) Date of publication of patent specification: **16.08.90**

(21) Application number: **84308344.5**

(22) Date of filing: **30.11.84**

(51) Int. Cl.⁵: **G 06 F 9/46**

54 **Microcomputer for time dependent processes.**

(43) Date of publication of application:
**11.06.86 Bulletin 86/24**

(45) Publication of the grant of the patent:
**16.08.90 Bulletin 90/33**

(84) Designated Contracting States:
**DE FR GB IT NL SE**

(56) References cited:
**GB-A-2 030 331**

**PROCEEDINGS IFIP CONGRES, Stockholm, 5th-10th August 1974, pages 257-260, North-Holland Publishing Company, Amsterdam, NL; E. FIZZAROTTI: "A communications oriented multitasking system"**

(73) Proprietor: **INMOS LIMITED**
**1000 Aztec West Almondsbury**
**Bristol BS12 4SQ. (GB)**

(72) Inventor: **May, Michael David**
**124 Pembroke Road**
**Clifton Bristol BS8 3ER (GB)**
Inventor: **Shepherd, Roger Mark**
**21 Cotham Vale**
**Cotham Bristol BS6 6HS (GB)**

(74) Representative: **Palmer, Roger et al**
**PAGE, WHITE & FARRER 54 Doughty Street**
**London WC1N 2LS (GB)**

# EP 0 183 877 B1

**Description**

The invention relates to computers including microcomputers and is particularly applicable to microcomputers capable of executing time dependent processes.

A microcomputer is described in our European Patent Specification 0110642 which includes scheduling means to permit the processor to share its processing time between a plurality of concurrent processes. A linked list of scheduled processes awaiting execution may be formed. A currently executing process may be descheduled and processes may be scheduled by adding to a scheduled list when required. This may for example arise in effecting message transmission between two processes where it is required that both processes be at corresponding stages in their program sequence when the message transmission occurs. However that patent specification does not describe the use of time dependent processes wherein scheduling of a process may be effected at a specified time for the process.

The operation of time dependent processes is described in UK Patent Specification 2030331A. However, processes described in that UK patent specification include "wait-for time period" commands so that on reaching those commands the process undergoes a delay time specified by the command. Consequently all such processes are caused to undergo the specified delay on reaching such a command regardless of the actual time at which the process reaches such a command.

The present invention is however concerned with time dependent processes having a specified scheduling time so that the process is not executed until that scheduling time has arrived. It is not concerned with introducing preset delays.

It is an object of the present invention to provide an improved microcomputer for use in executing time dependent processes, and an improved method of operating concurrent processes.

It is a further object of the present invention to provide an improved microcomputer for operating a plurality of concurrent time dependent processes so that the processor shares its processing time between the plurality of processes, together with means for specifying a scheduling time before which the process is not to proceed so that the process must wait if the scheduling time has not yet arrived.

It will be understood that the term microcomputer relates to small size computers generally based on integrated circuit devices but it does not impose any limit on how small a computer may be.

The present invention provides a method of operating concurrent processes, at least some of which are time dependent processes, in a computer system wherein each concurrent process executes a program having a plurality of instructions, comprising the steps of forming a first pointer for each process to identify the process, forming a second pointer for each process to indicate a program stage for the process, scheduling a plurality of processes for execution by a processor including indicating a current process which is being executed by the processor, identifying a time dependent collection of processes to be executed by the processor, the process in said collection having the earliest scheduling time being indicated as the next process, wherein a respective scheduling time is provided for each process in the time dependent collection, and wherein execution of said current process comprises executing a sequence of instructions including a time related instruction indicating a scheduling time before which the current process is not to continue execution and responding to execution of said time related instruction by (a) determining whether said scheduling time has yet arrived and (b) in response to determining that the scheduling time has not yet arrived (i) storing said second pointer for the process, (ii) stopping execution of the said current process, (iii) adding the stopped process to said time ordered collection at a position in the time ordered collection such that its scheduling time forms an ordered sequence of scheduling times in the collection, and (iv) setting the indication of the current process to indicate a further scheduled process, and at a time after the scheduling time of said next process, responding to execution of an instruction stopping the current process by setting the indication of the current process to indicate the said next process and executing said next process at a program stage indicated by the second pointer for the said next process.

The invention also provides a microcomputer for use in the aforesaid method, which microcomputer comprises memory and a processor for executing a plurality of concurrent processes, at least some of said processes being time dependent, a scheduling system comprising an addressable storage element for indicating the current process which is being executed by the processor, and a timer list for identifying one or more processes which form a collection awaiting execution by the processor after respective scheduling times for the processes in said collection, said list having a next process indicator to indicate the next process in the collection for execution by the processor after its scheduling time occurs, wherein a set of storage locations is associated with said timer list for indicating respective scheduling times when the processes in said collection become ready for execution, and a control system is provided for adding a further process to said collection at a time-ordered position between a preceding process having an earlier scheduling time and a following process having a later scheduling time.

It will be seen that the above microcomputer and method of operating concurrent processes require the time dependent processes to specify a scheduling time rather than a preset number of delay units. Consequently such a time dependent process is delayed only if the specified scheduling time has not yet arrived. If that scheduling time has not arrived the delay before that process becomes rescheduled is only the time necessary to reach a specified scheduling time. In other words unnecessary delay is avoided. This not possible with the time dependent processes described in UK Specification 2030331 where the time delay commands always cause the predetermined time delay.

2

Brief Description of the Drawings

An embodiment of the invention will now be described by way of example and with reference to the accompanying drawings in which:-

Figure 1 is a block diagram showing the main features of a microcomputer embodying the present invention,

Figure 2 is a block diagram of part of the microcomputer and for convenience has been split into two parts shown on Figures 2A and 2B, the Figure particularly illustrates the registers, data paths and arithmetic logic unit of the central processing unit as well as the interface between the central processing unit and the memory and communication links,

Figure 3 illustrates a timer logic circuit which forms part of Figure 2B,

Figure 4 illustrates the relationship between processor registers and the workspaces of a scheduled list of high priority processes for execution by the microcomputer,

Figure 5 is similar to Figure 4 but illustrates a scheduled list of low priority processes while a high priority process is being executed,

Figure 6 illustrates a timer list of low priority processes awaiting predetermined times before being rescheduled,

Figure 7 illustrates a timer list of high priority processes awaiting predetermined times before being rescheduled,

Figure 8 illustrates a network of communicating microcomputers in accordance with the present invention, the microcomputers in the network having different wordlengths,

Figures 9A to 9D illustrate a sequence of operations for a process carrying out a "timer input" operation,

Figures 10A to 10E illustrate a sequence for inserting a process into a timer list,

Figures 11A to 11C illustrate a sequence of operations for a Time Alternative process and in particular illustrates how the process determines the earlier of the alternative times,

Figures 12A to 12C illustrate a sequence of operations by a process selecting between one of a number of alternative times, one of which has already arrived,

Figures 13A to 13F illustrate a sequence of operations for a process selecting between a number of alternative times, none of which has arrived when the process first attempts selection,

Figures 14A to 14D illustrate a sequence of operations for a process selecting between the alternative of an input from a message channel or the occurrence of a particular time, the message channel being ready to communicate at the time the process starts the selection, and

Figures 15A to 15F illustrate a sequence of operations for a process selecting between the alternative of an input through a message channel or the occurrence of a specified time in which the channel is not ready to input a message nor has the time occurred when the process attempts to select one of the alternatives.

Description of the Preferred Embodiment

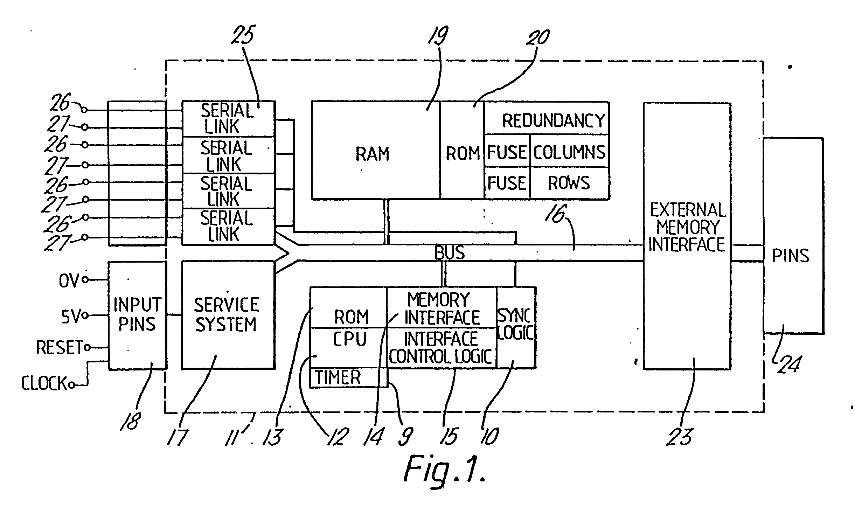

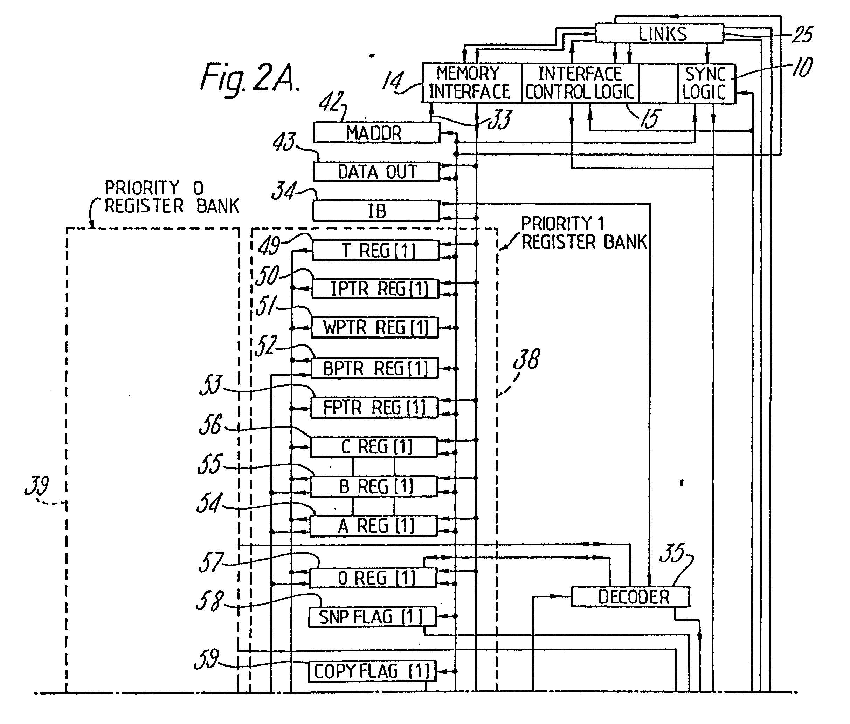

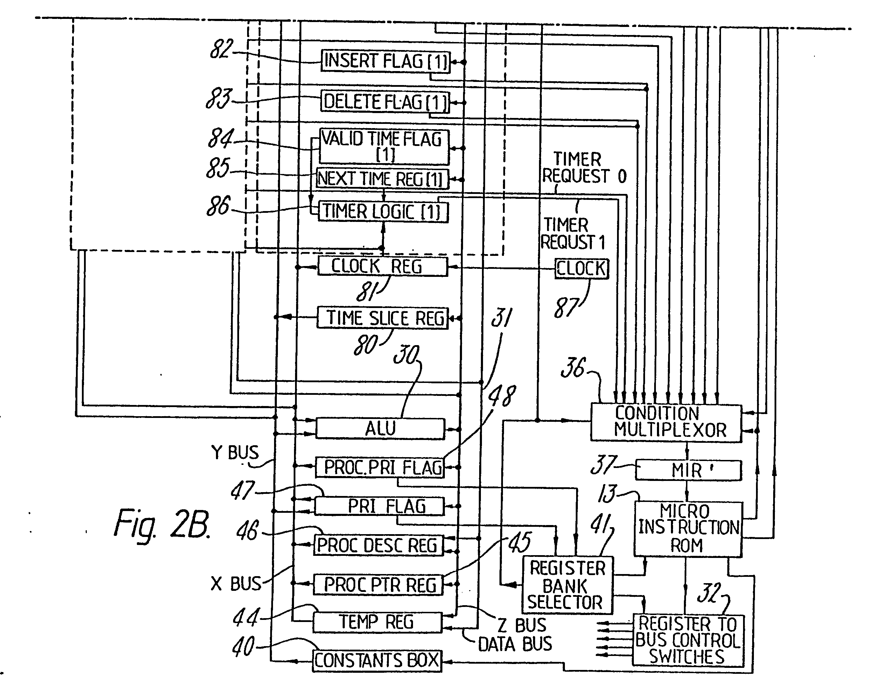

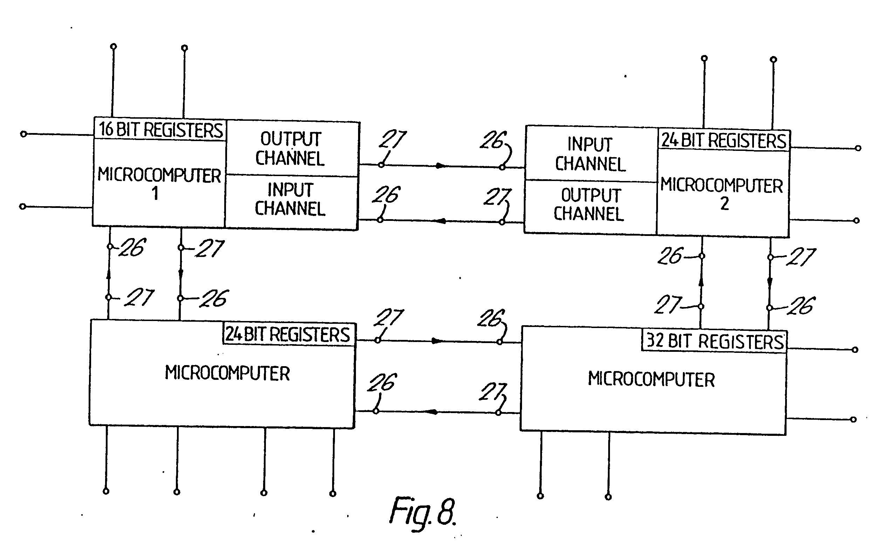

The microcomputer described in this example comprises an integrated circuit device in the form of a single silicon chip having both a processor and memory in the form of RAM as well as links to permit external communication. The main elements of the microcomputer are illustrated in Figure 1 on a single silicon chip 11 using p-well complementary MOS technology. A central processing unit (CPU) 12 is provided with a timer 9 to allow time control of the execution of processes. It also includes some read-only memory (ROM) 13 and is coupled to a memory interface 14 controlled by interface control logic 15. The CPU 12 incorporates an arithmetic logic unit (ALU), registers and data paths illustrated more fully in Figure 2. The CPU 12 and memory interface 14 are connected to a bus 16 which provides interconnection between the elements on the chip 11. A service system 17 is provided with a plurality of input pins 18. The microcomputer is provided with a random access memory (RAM) 19 and ROM 20 and the amount of memory on the chip is not less than 1 K byte so that the processor 12 can be operated without external memory. Preferably the memory on the chip is at least 4 K bytes. An external memory interface 23 is provided and connected to a plurality of pins 24 for connection to an optional external memory. To allow the microcomputer to be linked to other computers to form a network, a plurality of serial links 25 are provided having input and output pins 26 and 27 respectively. The input and output pins of one serial link may each be connected by its own single wire non-shared unidirectional connection to the corresponding output and input pins of a serial link on another microcomputer as shown in Figure 8. Each serial link is connected to a synchronisation logic unit 10 comprising process scheduling logic.

This embodiment is a development of the microcomputer described in our copending PCT patent application No PCTGB84/00379 and European Patent Application EP—A—0145244.

The present embodiment provides an improved of Transputer (Trade Mark of INMOS International plc) microcomputer. It provides for timer control so that processes may be executed in dependence on timer data and timer lists of processes awaiting specified times before execution may be formed.

The overall arrangement of the microcomputer is generally similar to that described in the above mentioned patent applications. In the following description similar names will be given to those parts corresponding to the embodiment in the above mentioned patent applications. The memory provides a plurality of process workspaces having addressable locations which can be indicated by pointers. Message communication can be effected through channels which may comprise addressable memory locations in the case of process to process communication on the same microcomputer. To effect process to process communication between different microcomputers input and output channels are provided in serial links and these channels may also be addressed in a manner similar to the locations provided in the memory.

In order to implement the improvements discussed above, various modifications in the construction and operation of the microcomputer are necessary and the following description will be directed to those aspects where modifications are involved in order to effect those improvements.

As in the example of the above mentioned patent applications, the particular wordlength of the example described is 16 bits but it will be understood that other wordlengths such as 8, 16, 24, 32 or other wordlengths may be used. Furthermore, in the present case different wordlength microcomputers can be connected in the same network as shown in Figure 8 so that they may communicate with each other regardless of their independent wordlength.

Each pointer is a single word and is treated as a two's complement signed value. That means that if the most significant bit in the pointer is a 1 the most signficant bit is taken as negative with all the remaining bits representing positive numbers. If the most significant bit is 0 then all bits in the pointer are taken as representing positive values. This enables the standard comparison functions to be used on pointer values in the same way that they are used on numerical values.

Certain values are never used as pointers as they are reserved to indicate that some special action is required.

In the following description, names are used to represent these and other values as follows:-

| | |
|---|---|
| MostNeg | the most negative value |
| | (the most significant bit is one, |
| | and all other bits are zero) |
| MostPos | the most positive value |
| | (the most significant bit is zero, |
| | and all other bits are one) |
| MachineTRUE | 1 |
| MachineFALSE | 0 |
| NotProcess.p | MostNeg |
| Enabling.p | MostNeg + 1 |
| Waiting.p | MostNeg + 2 |
| Ready.p | MostNeg + 3 |
| TimeSet.p | MostNeg + 1 |
| TineNotSet.p | MostNeg + 2 |

The special values for TimeSet.p and TimeNotSet.p are never used in the same locations as Enabling.p or Waiting.p so that no ambiguity arises from the dual use of the values MostNeg + 1 and MostNeg + 2.

As in the example of the above mentioned patent applications, each process has a workspace consisting of a vector of words in memory used to hold the local variables and temporary values manipulated by the process. A workspace pointer WPTR is used to point to a set location for the process workspace. Each process can be identified by a "process descriptor" of which the least significant bit indicates the priority of the process and the most significant 15 bits indicate the word in memory identifying the process workspace. In this example the microcomputer allocates one of two possible priorities to each process. A high priority process is given the designation Pri = 0 and a low priority process has a designation Pri = 1. It can therefore be seen that each process descriptor comprises a single word which is formed by taking the "bitwise OR" of the workspace pointer WPTR and the process priority Pri. Similarly the workspace pointer WPTR can be obtained from a process descriptor by forming the "bitwise AND" of the process descriptor and NOT 1. The priority of the process can be obtained by forming the "bitwise AND" of the process descriptor and 1.

CPU Data Paths and Registers

The central processing unit 12 and its operation will be more fully understood with reference to Figure 2. For convenience this has been split into Figures 2A and 2B but it is to be understood that the diagrams of Figures 2A and 2B are joined together to form the register set and data paths.

The CPU 12 includes an arithmetic logic unit (ALU) 30 and a plurality of data registers connected to an X bus, Y bus, Z bus and bidirectional data bus 31. The operation of the registers and their interconnections with the buses is controlled by a plurality of switches diagrammatically represented at 32 and controlled by signals derived from a microinstruction program contained in the ROM 13. Communication between the CPU and the memory is effected via a unidirectional address path 33 leading to the memory interface 14 as well as the data bus 31.

As in the above mentioned patent applications, each instruction consists of 8 bits, 4 bits representing the required function of the instruction and 4 bits being allocated for data. Each instruction derived from the program sequence for the process is fed to an instruction buffer 34 and the instruction is decoded by a decoder 35. The output of the decoder is fed through a condition multiplexor 36 to a microinstruction register 37 used for addressing the microinstruction ROM 13. The operation of the instruction buffer 34, decoder 35, condition multiplexor 36, MIR 37, microinstruction ROM 13 and switches 32 are generally as described in the above mentioned patent applications, and in European Patent Specification 0110642.

As the present embodiment is arranged to deal with two sets of processes, those with priority 0 and those with priority 1, two register banks are provided. Register bank 38 is provided for the priority 1 processes and a similar register bank 39 is provided for the high priority 0 processes. Both register banks have a similar set of registers similarly connected to the X, Y, Z and data buses. For simplicity, the registers and their connections have only been shown in detail for register bank 38. In addition to the two register banks allocated to specific priorities, the CPU includes a constants box 40, a register bank selector 41 and a number of other registers indicated in Figures 2A and 2B which are common to both priority 0 and priority 1 processes. The registers are as follows:-

| Abbreviation | Register |
|---|---|
| | Common to both priority processes |
| MADDR | Memory address register 42 containing the address of the memory location required. |
| DATAOUT | A register 43 for supplying data to the memory on the data bus 31. |
| IB | Instruction buffer 34 for receiving sequentially instructions from the memory. |
| TEMP REG | A temporary register 44. |
| PROCPTR REG | A register 45 for holding a process pointer (no priority indication). |
| PROCDESC REG | A register 46 for containing a process descriptor |
| PRIFLAG | A 1 bit register or flag 47 for indicating the priority 0 or 1 of the currently executing process. If the processor is not executing a process this is set to 1. |
| PROCPRIFLAG | A 1 bit register or flag 48 for indicating a process priority. |

| Abbreviation | Register |
|---|---|

**Common to both priority processes**

TIME SLICE REG    A register 80 for holding the time at which the current process must be temporarily stopped.

CLOCK REG    A register 81 for indicating the current time.

**Registers in Bank 38 for Priority 1**

TREG    A temporary register 49.

IPTR REG    A register 50 which holds the instruction pointer (IPTR) of any process indicated by register 51

WPTR REG    A register 51 for holding the workspace pointer (WPTR) of the current process or an interrupted process.

BPTR REG    A register 52 holding the workspace pointer of a process at the end of a list of priority 1 processes awaiting execution.

FPTR REG    A register 53 holding the workspace pointer of a process at the front of a list of priority 1 processes awaiting execution.

AREG    A first register 54 for holding an operand for the ALU 30 and arranged as a stack with registers 55 and 56.

BREG    A second register 55 forming part of the stack.

CREG    A register 56 forming a third register in the stack.

OREG    An operand register 57 for receiving the data derived from an instruction in the instruction buffer 34, and used as a temporary register.

SNPFLAG    A 1 bit register or flag 58 which when set to 1 indicates that the current process should be descheduled on completion of the current instruction.

6

| Abbreviation | Register |
|---|---|
| COPYFLAG | A 1 bit register or flag 59 which when set to 1 indicates that the process is copying a block of data to or from memory. |
| INSERTFLAG | A 1 bit register or flag 82 which is set to 1 when the processor is inserting a process into a timer list. |
| DELETEFLAG | A 1 bit register or flag 83 which is set to 1 when the processor is deleting a process from a timer list. |
| VALIDTIMEFLAG | A 1 bit register or flag 84 which is set to 1 if there are any processes on the timer list of appropriate priority. |
| NEXTTIMEFLAG | A register 85 for holding the time at which the first process on the timer list of appropriate priority becomes ready for scheduling. |

The bank of registers 39 for priority 0 processes is the same as that already described for priority 1 processes. In the description that follows the suffix [1] indicates a register relevant to the priority 1 bank and the suffix [0] indicates that the register relates to the priority 0 bank. Where the priority is not known the suffix [Pri] indicates that a register of appropriate priority to the process is used.

The registers are generally of word length which in this case is 16 bits apart from the 1 bit flags 47, 48, 58, 59, 82, 83 and 84. The instruction buffer may be of 8 bit length if arranged to hold only 1 instruction at a time. The A, B and C register stack 54, 55 and 56 are the sources and destinations for most arithmetic and logical operations. They are organised as a stack.

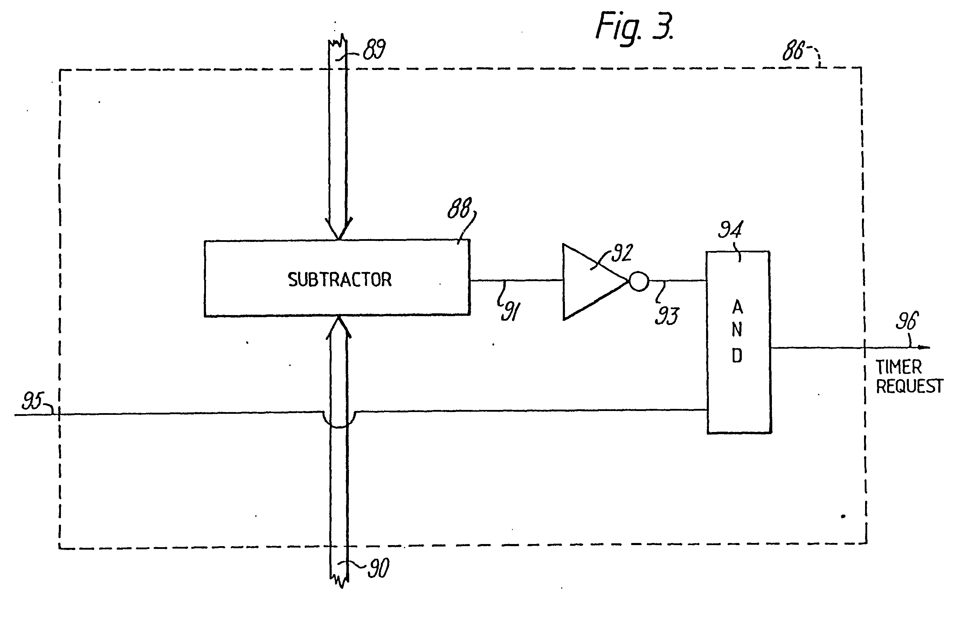

In addition the registers and flags, each of the banks 38 and 39 includes TIMER LOGIC 86 arranged to receive inputs from the VALID TIME FLAG 84, the next TIME REG 85 and the CLOCK REG 81. The TIMER LOGIC 86 will be described more fully with reference to Figure 3. The CLOCK REG 81 receives an input from a PROCESSOR CLOCK 87. The TIMER LOGIC 86 for each of the register banks constitutes the timer 9 of Figure 1.

The OREG 57 of both register banks 38 and 39 are connected to the decoder 35 so that for both priority processes that part of the instruction which is fed into the OREG register reaches the decoder for use in generating appropriate microinstructions. The SNP FLAG 58, COPY FLAG 59, INSERT FLAG 82, DELETE FLAG 83 and TIMER LOGIC 86 of both priority banks are also connected to the condition multiplexor 36 so that the microinstructions can take into account the setting of these flags and the logic output for either priority process in determining the next action to be effected by the processor at any time.

As the workspace pointer (WPTR) of a process is used as a base from which local variables of the process can be addressed, it is sometimes necessary to calculate offset values from the location indicated by the workspace pointer. The constants box 40 is connected to the Y bus and enables constant values to be placed on that bus under the control of the microinstruction ROM 13. These can be used in pointing to offset locations in a process workspace and providing time slice periods. In order to effect selection of one or other of the register banks 38 or 39, the register bank selector 41 has inputs from the PRI FLAG 47, the PROCPRI FLAG 48 and the microinstruction ROM 13. The output from the register bank selector is connected to the condition multiplexor 36, to the decoder 35 and to the switches 32. Depending on the output of the microinstruction ROM 13, the selector will chose the register bank indicated by the PRI FLAG 47 or the PROCPRI FLAG 48.

The TIMER LOGIC 86 is similar for each of the register banks and one is shown more fully in Figure 3. The logic unit 86 comprises a subtractor 88 arranged to receive an input on line 89 from the NEXT TIME REG and this time value is subtracted in the subtractor 88 from the time value supplied on a line 90 from the

EP 0 183 877 B1

CLOCK REG 81. The most significant bit of the difference is provided on an output on line 91 to an inverter 92 which supplies a signal on line 93 to as logical AND gate 94. The gate 94 also receives an input on line 95 from the VALID TIME FLAG 84. The AND gate 94 provides an output on line 96 which is fed to the condition multiplexor 36. The signal on line 96 is called a "Timer Request" signal and is arranged to cause the processor to remove a process from the top of a timer list so that it becomes ready for execution. This will be described more fully below. It will be appreciated that the logic diagram shown in Figure 3 is arranged so that a "Timer Request" signal on line 96 is only output when two conditions are met simultaneously. Firstly the VALID TIME FLAG 84 must be set to the value 1 and the time indicated by the CLOCK REG 81 must either be after or equal to the time indicated by the NEXT TIME REG 85. The subtractor 88 is used to subtract the value contained in the NEXT TIME REG 85 from the value held in the CLOCK REG 81 and if the result of that subtraction is a negative number the most significant bit will be 1 due to the use of two's complement signed values as referred to above. For this reason line 91 is arranged to output the most significant bit resulting from the subtraction and the inverter 92 is required so that the AND gate 94 only provides the "Timer Request" when the result of the subtraction provides a positive result thereby causing a 0 bit on line 91.

Memory Allocation for Process Workspaces

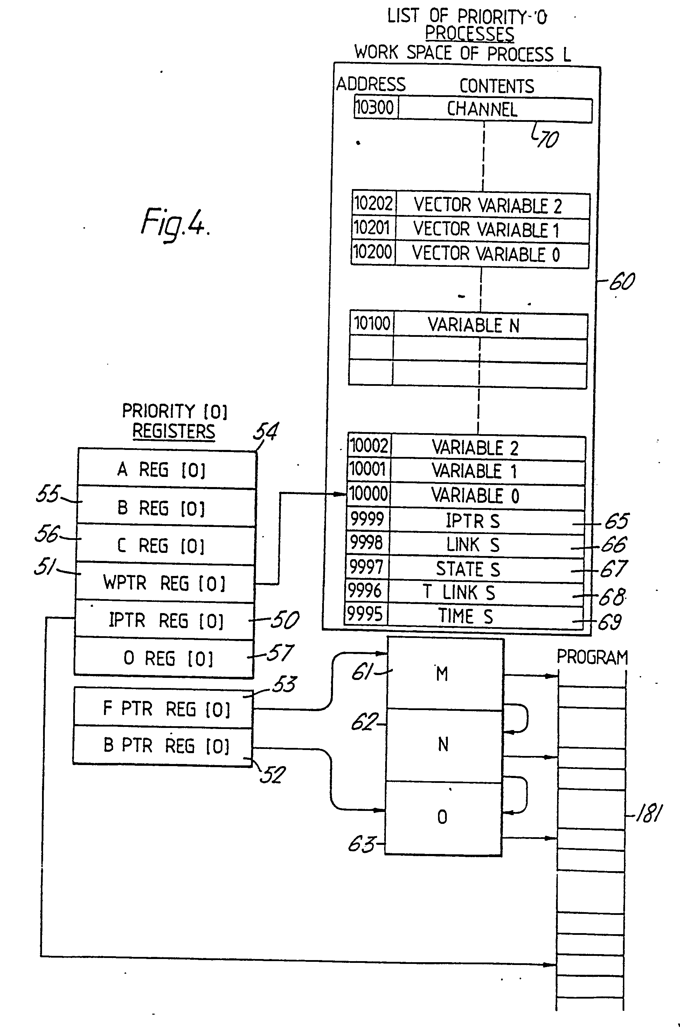

As in the example described in the above mentioned patent applications, the microcomputer carries out a number of processes together sharing its time between them. Processes which are carried out together are called concurrent processes and at any one time the process which is being executed is called the current process. Each concurrent process has a region of memory called a workspace for holding the local variables and temporary values manipulated by the process. The address of the first local variable of the workspace is indicated by the workspace pointer (WPTR). This is indicated in Figure 4 where four concurrent processes, Processes L, M, N and O have workspaces 60, 61, 62 and 63. The workspace 60 has been shown in more detail and the workspace pointer held in the WPTR REG 51 points to the 0 location which is a single word location having the address indicated in this example as 10000. The other local variables for this process are addressed as positive offset addresses from the word indicated by the workspace pointer. Some of the workspace locations with small negative offsets from the 0 location are used for scheduling timing and communication purposes. In this example five additional word locations 65, 66, 67, 68 and 69 are shown having negative offsets of 1, 2, 3, 4 and 5 respectively below the 0 location indicated by the WPTR. These locations are as follows:-

| Offset | Name of Offset | Name of Location |
|--------|----------------|------------------|
| -1 | Iptr.s | Iptr location |
| -2 | Link.s | Link location |
| -3 | State.s | State location |
| -4 | TLink.s | TLink location |
| -5 | Time.s | Time location |

Location 65 is used when a process is not the current process to hold a pointer (IPTR) to the next instruction to be executed by the process when it becomes the current process. Location 66 is used to store a workspace pointer of a next process on a linked list or queue of scheduled processes awaiting execution. Location 67 is normally used to contain an indication of the state of a process performing an alternative input operation or as a pointer for copying of a block of data. Location 68 is used to store a workspace pointer of a next process on a linked timer list of processes awaiting predetermined times before being scheduled for execution and it is also used to indicate the state of a process performing an alternative timer input operation. Location 69 is used to indicate a time after which the process may be executed.

The memory also provides word locations for process to process communication and Figure 3 indicates such a channel 70.

Notation

In the following description of the way in which the microcomputer operates, particularly with reference to its functions, operations and procedures, notation is used in accordance with the OCCAM (Trade Mark of INMOS International plc) language. This language is set forth in the booklet entitled "*Programming Manual — OCCAM*" published and distributed by INMOS Limited in 1983 in the United Kingdom. Furthermore the notation used has been set out fully in European Patent Application 0110642 and for simplicity will not be repeated in this specification. However the explanation of OCCAM and the notation used which is set out in European Patent Application 0110642.

In addition to the above mentioned notation the following description refers to certain memory access procedures which are defined as follows:-

8

```
AtWord(Base, N, A)              sets A to point at the
                                Nth word past Base


AtByte(Base, N, A)              sets A to point at the
                                Nth byte past Base


RIndexWord(Base, N, X)          sets X to the value of the
                                Nth word past Base


RIndexByte(Base, N, X)          sets X to the value of the
                                Nth byte past Base


WIndexWord(Base, N, X)          sets the value of the
                                Nth word past Base to X


WIndexByte(Base, N, X)          sets the value of the
                                Nth byte past Base to X


WordOffset(Base, X, N)          set N to the number of words
                                between X and Base
```

## PROCEDURES USED BY THE MICROCOMPUTER

In the following description various procedures (PROC) are referred to. The following nine procedures are used in the description of the behaviour of the processor.

```
Dequeue
Run
StartNextProcess
HandleRunRequest
HandleReadyRequest
HandleTimerRequest
BlockCopyStep
Insert Step
Delete Step
```

The procedures "HandleRunRequest" and "HandleReadyRequest" and "BlockCopyStep" have been fully described in our copending PCT patent application No PCTGB84/00379 and European Patent Application No. EP—A—0145244. The definition of these procedures is not changed for the present invention and as they do not relate to the timer control they will not be repeated in this patent application.

Procedure "Dequeue" makes the process on the front of the priority "Pri" scheduled process queue the current process. If Pri = 1 it sets the TIME SLICE REG 80 to the time at which that process must be temporarily stopped to allow other processes to be executed. The length of time slice is determined by a constant time duration stored as one of the constants in the constants box 40.

```
1.  PROC Dequeue =
2.     SEQ
3.        WptrReg[Pri] := FptrReg[Pri]
4.        IF
5.          FptrReg[Pri] = BptrReg[Pri]
6.            FptrReg[Pri] := NotProcess.p
7.          TRUE
8.            RIndexWord(FptrReg[Pri], Link.s, FptrReg[Pri])
9.        RIndexWord(WptrReg[Pri], Iptr.s, IptrReg[Pri]) :
10.       IF
11.         Pri = 1
12.           TimeSliceReg := ClockReg + LengthOfTimeSlice
13.         Pri = 0
14.           SKIP :
```

Procedure "Run" schedules the process whose descriptor is contained in the ProcDesc register. This will cause a priority 0 process to start running immediately, in preference to any already executing priority 1 process. In the following, all lines beginning -- are merely by way of explanation and do not form part of the definition.

```
1. PROC Run =
2.    SEQ
3.       ProcPriFlag := ProcDescReg /\    1
4.       ProcPtrReg  := ProcDescReg /\ (NOT 1)
5.       IF
6.         (Pri = 0) OR ((ProcPriFlag = Pri) AND (WptrReg[Pri] <>
                                                    NotProcess.p))
7.           SEQ --  add process to queue
8.             IF
9.               FptrReg[ProcPriFlag] = NotProcess.p
10.                FptrReg[ProcPriFlag] := ProcPtrReg
11.              TRUE
12.                WIndexWord(BptrReg[ProcPriFlag], Link.s, ProcPtrReg)
13.             BptrReg[ProcPriFlag] := ProcPtrReg
14.         TRUE
15.           SEQ  --  either Pri 0 interrupting Pri 1, or Pri 1
                                                    and idle m/c
16.             Pri := ProcPriReg
17.             WptrReg[Pri] := ProcPtrReg
18.             RIndexWord(WptrReg[Pri], Iptr.s, IptrReg[Pri])
19.             Oreg[Pri] := 0 :
```

Procedure "StartNextprocess" deschedules the current process and, if there is another runnable process, selects the next runnable process. This may cause the resumption of an interrupted priority 1 process if there are no further priority 0 processes to run.

Procedure "StartNextProcess" is always executed as a result of the SNPFlag being set. The first action of this process is, therefore, to clear that flag.

```
1.   PROC StartNextProcess =
2.     SEQ
3.       SNPFlag[Pri] := 0              -- Clear the SNP flag
4.       IF
5.         FptrReg[Pri] <> NotProcess.p
6.           Dequeue
7.         Pri = 0
8.           SEQ
9.             Pri := 1
10.            IF
11.              (WptrReg[Pri] = NotProcess.p) AND
12.              (FptrReg[Pri] <> NotProcess.p)
13.                Dequeue
14.              TRUE
15.                SKIP
16.        Pri = 1
17.          WptrReg[Pri] := NotProcess.p :
```

Procedure "HandleTimerRequest" is executed as a result of a TIMER REQUEST on line 96 from one of the TIMER LOGIC units 86. If the request is for a priority 0 process the TimerRequest0 signal will have occurred and the processor will have set the ProcPri register to 0. If the request is for a priority 1 process the TimerRequest1 signal will have occurred and the processor will have set the ProcPri register to 1. The procedure identifies the process which has become ready from the contents of the appropriate TPTR word. The procedure schedules the process if appropriate and updates the TPTR word, NextTimeReg and ValidTimeFlag for the relevant priority level.

```
     PROC HandleTimerRequest =
1.   SEQ
2.     -- set ProcptrReg to first process on list
3.     RIndexWord(TptrLoc0, ProcPri, TempReg)
4.     ProcPtrReg := TempReg
5.     -- set TempReg to TLink location of first process
6.     RIndexWord(ProcPtrReg, TLink.s, TempReg)
7.     WIndexWord(ProcPtrReg, TLink.s, TimeSet.p)
8.     -- update timer pointer word
9.     WIndexWord(TptrLoc0, ProcPri, TempReg)
10.    -- is the list now empty?
11.    IF
12.      TempReg = NotProcess.p
13.        -- Yes.
14.        ValidTimeFlag[ProcPri] := 0
```

11

```
15.     TempReg <> NotProcess.p
16.       -- No; set NextTimeReg
17.        RIndexWord(TempReg, Time.s, NextTimeReg[ProPri])
18.  -- check State location of process
19.  RIndexWord(ProcPtrReg, State.S, TempReg)
20.  IF
21.    TempReg = Ready.p
22.      SKIP
23.    TempReg = Waiting.p
24.      SEQ
25.        WIndexWord(ProcPtrReg, State.s, Ready.p)
26.        ProcDescReg := ProcPtrReg \/ ProcPri
27.        Run :
```

In the above definition reference is made to Tptr LocO. It will be appreciated that there are two Tptr locations, one for priority 1 and another for priority 0. They occupy adjacent memory locations and hat for priority 0 has the address TptrLocO. In this way either of the locations can be addressed by an offset of 0 or 1 from TptrLocO depending on the relevant priority.

The procedure "InsertStep" is executed as a result of the InsertFlag[Pri] being set. Repeated performance of this procedure will insert the current process into the timer list for the current priority level in the correct position. The Breg[Pri] and Creg[Pri] registers identify the point at which the search for the correct location has so far reached.

When the insertion has been made the procedure clears the InsertFlag[Pri], resets the timer registers as appropriate and causes the next process to be executed.

```
     PROC InsertStep =
       -- Areg[Pri] contains the time associated with this process
       -- Breg[Pri] is used as a pointer to the pointer to the next
          process
       -- Creg[Pri] is used as a pointer to the next process
1.   SEQ
2.     IF
3.       Creg[Pri] <> NotProcess.p
4.         -- pick up time associated with next process
5.         RIndexWord(Creg[Pri], Time.s, Treg[Pri])
6.       Creg[Pri] = NotProcess.p
7.         SKIP
8.     IF
9.       (Creg[Pri] <> NotProcess.p) AND (Areg[Pri] AFTER
                                          Treg[Pri])
10.        SEQ
11.          -- move on one process
12.          AtWord(Creg[Pri], TLink.s, Breg[Pri])
13.          RIndexWord(Breg[Pri], 0, Creg[Pr])
```

```
14.    TRUE
15.      SEQ
16.        -- found place to insert
17.        InsertFlag[Pri] := 0
18.        -- link in this process
19.        WIndexWord(Breg[Pri], 0, WptrReg[Pri])
20.        WIndexWord(WptrReg[Pri], TLink.s, Creg[Pri])
21.        -- Set the NextTimeReg

22.        RIndexWord(TptrLoc0, Pri, Treg[Pri])
23.        RIndexWord(Treg[Pri], Time.s, NextTimeReg[Pri])
24.        ValidTimeFlag[Pri] := 1
25.        WIndexWord(WptrReg[Pri], Iptr.s, IptrReg[Pri])
26.        SNPFlag[Pri] := 1 :
```

The procedure "DeleteStep" is executed as a result of the DeleteFlag[Pri] being set. Repeated performance of this procedure will delete the current process from the timer list for the current priority level. The Breg[Pri] and Creg[Pri] registers identify the point at which the search for the current process has so far reached.

When the deletion has been made the procedure clears the DeleteFlag[Pri] and resets the timer registers as appropriate.

```
     PROC DeleteStep =
1.     IF
2.       Creg[Pri] <> WptrReg[Pri]
3.         SEQ
4.           -- not yet found current process; step on
5.           AtWord(Creg[Pri], TLink.s, Breg[Pri])
6.           RIndexWord(Breg[Pri], 0, Creg[Pri])
7.       Creg[Pri] = WptrReg[Pri]
8.         SEQ -- found process; delete from list
9.           DeleteFlag[Pri] := 0
10.          RIndexWord(WptrReg[Pri], TLink.s, Creg[Pri])
11.          WIndexWord(Breg[Pri], 0, Creg[Pri])
12.          -- Check if there are any processes left on queue
13.          RIndexWord(TptrLoc0, Pri, Breg[Pri])
14.          IF
15.            Breg[Pri] = NotProcess.p
16.              -- No processes left
17.              ValidTimeFlag[Pri] := 0
18.            Breg[Pri] <> NotProcess.p
19.              -- Get time from first process
20.              RIndexWord(Breg[Pri], Time.s, NextTimeReg[Pri])
21.          WIndexWord(WptrReg[Pri], TLink.s, TimeNotSet.p) :
```

The processor performs a sequence of actions. These are performed either on behalf of the current process, or on behalf of a request made by a serial link 25 or the timer 9. An action which is performed on behalf of a priority 0 process, a priority 0 timer or a communication channel handling a priority 0 process, is called a "priority 0 action". A "priority 1 action" is correspondingly defined.

The actions which may be performed on behalf of the current process are the procedures "StartNextProcess", "InsertStep", "DeleteStep", "BlockCopyStep" or to fetch, decode and execute an instruction.

The actions which may be performed by the processor on behalf of a serial link are the procedures "HandleRunRequest" and "HandleReadyRequest" and these have been fully described in our copending patent applications referred to above. The actions which may be performed by the processor on behalf of the timer 9 are set out in the procedure "HandleTimerRequest" as defined above.

Each of these actions corresponds to a sequence of microinstructions. The last microinstruction in any of the sequences comprising these actions is "NextAction". This causes the processor to choose the next action to be performed.

The way in which the processor decides which action is to be performed next when a "NextAction" microinstruction is executed is as follows. The sync control logic 10 will forward to the processor at most one "RunRequest" or "ReadyRequest" at any time. It will not forward a priority 1 request if there is a priority 0 request outstanding. This results in two signals being input to the condition multiplexor 36, one indicating the presence of a request and the other indicating the priority of that request.

The two signals "TimerRequest0" and "TimerRequest1" are connected to the condition multiplexor 36 which is also connected to signals from the currently selected SNPFlag 58, DeleteFlag 83, InsertFlag 82 and CopyFlag 59. It is therefore able to make the selection as described below. The processor will perform the procedure "StartNextProcess" if the SNPFlag[Pri] is set. Otherwise the processor will select a priority 0 action if there is one that can be perfomed. Otherwise the processor will select a priority 1 action if there is one that can be performed. Otherwise the processor will wait until there is a request from a timer or communication channel.

The processor selects an action at a particular priority level Pri according to the following rules. The processor will perform a "DeleteStep" if the DeleteFlag[Pri] is set. Otherwise the processor will perform an "InsertStep" if the InsertFlag[Pri] is set. Otherwise the processor will handle any priority Pri channel request. Otherwise the processor will handle any priority Pri timer request. Otherwise the processor will perform the procedure "BlockCopyStep" if the CopyFlag[Pri] is set. Otherwise the processor will fetch, decode and execute an instruction if there is a current process of priority Pri.

Instructions are fetched, decoded and executed as described in our European Patent Specification 0110642.

The description of the function set which follows refers to the additional four procedures:-

TimeSlice
InsertInTimerList
DeleteFromTimerList
IsThisSelectedProcess

In the following definitions of these procedures reference is made to relative times, The CLOCK REG 81 increments by 1 regularly and goes through continuous cycles incrementing from the most negative value up to the most positive value. The next increment after the most positive value takes the register back to the most negative value. In the following description the expression (X AFTER Y) means X is later than the time Y. All times between (X + 1) and (X + MostPos) are defined to be AFTER X. All times which are between (Clock Reg + 1) and (Clock Reg + MostPos) are considered to be in the future and those which are between (Clock Reg and (− 1)) and (Clock Reg + MostNeg) are considered to be in the past.

The additional procedure definitions are as follows:-

```
PROC  TimeSlice =
 IF
  (Pri = 1) AND ((ClockReg AFTER TimeSliceReg) OR (ClockReg =
  TimeSlice))
    SEQ
      ProcDescReg := Wptr \ / Pri
      Run
      SNP[Pri] := 1
  TRUE
    SKIP


PROC  InsertInTimerList =
  -- This sets up the registers and the Insert Flag so that
     repeated execution of InsertSep will result in this process
     being inserted into the time list at the time specified in
     Areg[Pri] and then descheduled
  -- Breg[Pri] is used as a pointer to the pointer to the next
     process
  -- Creg[Pri] is used as a pointer to the next process
  SEQ
      WIndexWord(WptrReg[Pri], Time.s, Areg[Pri])
      InsertFlag[Pri] := 1
      AtWord(TptrLoc0, Pri, Breg[Pri])
      RIndexWord(Breg[Pri], 0, Creg[Pri]):


PROC DeleteFromTimerList =
  -- This causes the current process to be deleted from the
     appropriate timer list, TimeNotSet to be written to the TLink
     location.  This is achieved by setting up the registers and
     then repeatedly executing DeleteStep.
  -- Areg is NOT to be used
  -- Breg is used as a pointer to the pointer to the next process
  -- Creg is used as a pointer to the next process
  SEQ
    DeleteFlag[Pri] := 1
    AtWord(TptrLoc0, Pri, Breg[Pri])
    RIndexWord(Breg[Pri], 0, Creg[Pri]):
```

```
1.  PROC IsThisSelectedProcess =
2.     -- this is used by all the disable instructions
3.     SEQ
4.        RIndexWord(WptrReg[Pri], 0, Oreg[Pri])
5.        IF
6.          Oreg[Pri] = (-1)
7.             SEQ
8.                WIndexWord(WptrReg[Pri], 0, Areg[Pri])
9.                Areg[Pri] := MachineTRUE
10.         Oreg[Pri] <> (-1)
11.            Areg[Pri] := MachineFALSE :
```

FUNCTION SET

As in European patent specification 0110642, each instruction for the microcomputer includes a function element selected from a function set. The functions executed by the microcomputer include direct functions, the prefixing functions pfix and nfix, and an indirect function opr which uses the operand register Oreg to select one of a set of operations. As in the above patent application, the Oreg[Pri] is cleared after the execution of all instructions except PFIX and NFIX.

The improved set of direct functions and operations of the present application is as follows:-

DIRECT FUNCTIONS

| Code No | Abbreviation | Name |
|---------|--------------|------|
| 0  | ldl   | load local |
| 1  | stl   | store local |
| 2  | ldlp  | load local pointer |
| 3  | ldnl  | load non-local |
| 4  | stnl  | store non-local |
| 5  | ldnlp | load non-local pointer |
| 6  | eqc   | equals constant |
| 7  | ldc   | load constant |
| 8  | adc   | add constant |
| 9  | j     | jump |
| 10 | cj    | conditional jump |
| 11 | call  | call |
| 12 | ajw   | adjust workspace |
| 13 | opr   | operate |
| 14 | pfix  | prefix |
| 15 | nfix  | negative prefix |

16

OPERATIONS

| Code No | Abbreviation | Name |
| --- | --- | --- |
| 0 | rev | .reverse |
| 1 | ret | return |
| 2 | gcall | general call |
| 3 | gajw | general adjust workspace |
| 4 | ldpi | load pointer to instruction |
| 5 | bsub | byte subscript |
| 6 | wsub | work subscript |
| 7 | bcnt | byte count |
| 8 | wcnt | word count |
| 9 | lend | loop end |
| 10 | lb | load byte |
| 11 | sb | store byte |
| 12 | copy | copy message |
| 13 | gt | greater than |
| 14 | add | add |
| 15 | sub | subtract |
| 16 | mint | minimum integer |
| 17 | startp | start process |
| 18 | endp | end process |
| 19 | runp | run process |
| 20 | stopp | stop process |
| 21 | ldpri | load priority |
| 22 | in | input message |
| 23 | out | output message |
| 24 | alt | alt start |
| 25 | altwt | alt wait |
| 26 | altend | alt end |
| 27 | enbs | enable skip |
| 28 | diss | disable skip |
| 29 | enbc | enable channel |
| 30 | disc | disable channel |
| 31 | ldtimer | load timer |
| 32 | tin | timer input |
| 33 | talt | timer alt start |
| 34 | taltwt | timer alt wait |
| 35 | enbt | enable timer |
| 36 | dist | disable timer |

17

## EP 0 183 877 B1

All the above listed functions and operations, except operations with code numbers 31 to 36, have already been defined in the copending patent applications referred to above and they will not be redefined in this specification. However, the function "jump" and the operation "loop end" have been redefined to permit use of the timer 9 and these are now defined as follows:-

jump

```
def:        SEQ
              AtByte(IptrReg[Pri], Oreg[Pri], IptrReg[Pri])
              TimeSlice
purpose:    to transfer control backwards or forwards to provide
            loops and exits from loops, to cause a process to be
            rescheduled if its allotted time slice has elapsed
```

loop end

```
def:        SEQ
              RIndexWord(Breg[Pri], 1, Creg[Pri])
              Creg[Pri] := Creg[Pri] - 1
              WIndexWord(Breg[Pri], 1, Creg[Pri])
              IF
                Creg[Pri] > 0
                  SEQ
                    RIndexWord(Breg[Pri], 0, Creg[Pri])
                    Creg[Pri] := Creg[Pri] + 1
                    WIndexWord(Breg[Pri], 0, Creg[Pri])

                    AtByte(IptrReg[Pri], -Areg[Pri], IptrReg[Pri])
                TRUE
                  SKIP
              TimeSlice
purpose:    to implement replicators and to cause a process to be
            rescheduled if its allotted timeslice has elapsed
```

The additional operations and "altend" are as follows:

OPERATIONS FOR TIMER INPUT

load timer

```
def:        SEQ
              Creg[Pri] := Breg[Pri]
              Breg[Pri] := Areg[Pri]
              Areg[Pri] := ClockReg
purpose:    to load the current value of the timer into Areg
```

18

timer input

```
def:   1.    IF
       2.       ClockReg AFTER Areg[Pri]
       3.          SKIP
       4.       TRUE
       5.         SEQ
       6.            WIndexWord(WptrReg[Pri], State.s, Waiting.p)
       7.            Areg[Pri] := Areg[Pri] + 1
       8.            InsertInTimerList
```

purpose:    to schedule the process after a certain time

## OPERATIONS FOR ALTERNATIVE TIMER INPUT

timer alternative start

```
def:   1.    SEQ
       2.       WIndexWord(WptrReg[Pri], State.s, Enabling.p)
       3.       WIndexWord(WptrReg[Pri], TLink.s, TimeNotSet.p)
```

purpose:    to initialise the process state and the timer
            state prior to enabling alternative inputs
            and the timer

timer alternative wait

```
def:   1.   SEQ
       2.      WIndexWord(WptrReg[Pri], 0 -1)
       3.      RIndexWord(WptrReg[Pri], TLink.s, Breg[Pri])
       4.      RIndexWord(WptrReg[Pri], Time.s, Areg[Pri])
       5.      IF
       6.        (Breg[Pri] = TimeSet.p) AND (ClockReg AFTER
                                                    Areg[Pri])
       7.          SEQ -- clock makes process ready
       8.             WIndexWord(WptrReg[Pri], State.s, Ready.p)
       9.             WIndexWord(WptrReg[Pri], Time.s, ClockReg)
      10.        TRUE
      11.          SEQ -- clock does not make process ready
      12.             RIndexWord(WptrReg[Pri], State.s, Creg[Pri])
      13.             IF
      14.               Creg[Pri] = Ready.p
      15.                  WIndexWord(WptrReg[Pri], Time.s, ClockReg)
      16.               Creg[Pri] = Enabling.p
      17.                  SEQ
      18.                     WIndexWord(WptrReg[Pri], State.s,
                                                    Waiting.p)
```

```
           IF
               Breg[Pri] = TimeSet.p
                 SEQ
                   Areg[Pri] := Areg[Pri] + 1
                   InsertInTimerList
               Breg[Pri] = TimeNotSet.p
                 SEQ
                   WIndexWord(WptrReg[Pri], Iptr.s,
                                            IptrReg[Pri])
               SNPFlag[Pri] := 1
```

purpose:   to wait for one of a number of enabled
           inputs, some of which may be timer inputs


enable timer
```
  def:  SEQ
          IF
            Areg[Pri] = MachineFALSE
              SKIP
            Areg[Pri] <> MachineFALSE
              SEQ
                RIndexWord(WptrReg[Pri], TLink.s, Oreg[Pri])
                IF
                  Oreg[Pri] = TimeNotSet.p
                    SEQ
                      WIndexWord(WptrReg[Pri], TLink.s,
                                                TimeSet.p)
                      WIndexWord(WptrReg[Pri], Time.s,
                                                Breg[Pri])
                  Oreg[Pri] = TimeSet.p
                    SEQ
                      RIndexWord(WptrReg[Pri], Time.s,
                                                Oreg[Pri])
                      IF
                        Oreg[Pri] AFTER Breg[Pri]
                          WIndexWord(WptrReg[Pri], Time.s,
                                                     Breg[Pri])
                        TRUE
                          SKIP
          Breg[Pri] := Creg[Pri]
```
purpose:   to enable a timer input

```
disable timer
        usage:      On entry:   Areg = Code offset, Breg = Boolean guard
                                Creg = Time
                    On exit:    Areg = MachineTRUE if this was selected
                                component
                                Areg = MachineFALSE otherwise
        def:    1.IF
                2.  Breg[Pri] = MachineFALSE
                3.      Areg[Pri] := MachineFALSE

                4.  Breg[Pri] <> MachineFALSE
                5.      SEQ
                6.          RIndexWord(WptrReg[Pri], TLink.s, Oreg[Pri])
                7.          IF
                8.              Oreg[Pri] = TimeNotSet.p
                9.                  Areg[Pri] := MachineFALSE
                10.             Oreg[Pri] = TimeSet.p
                11.                 SEQ
                12.                     RIndexWord(WptrReg[Pri], Time.s, Oreg[Pri])
                13.                     IF
                14.                         Oreg[Pri] AFTER Creg[Pri]
                15.                             IsThisSelectedProcess
                16.                         TRUE
                17.                             Areg[Pri] := MachineFALSE
                18.             TRUE
                19.                 SEQ
                20.                     Areg[Pri] := MachineFALSE
                21.                     DeleteFromTimerList
        purpose:    to disable an enabled timer input
                    to select one of a number of alternative
                    timer inputs


alternative end
        def:                SEQ
                1.              RIndexWord(WptrReg[Pri], 0, Oreg[Pri])
                2.              AtByte(IptrReg[Pri], Oreg[Pri], IptrReg[Pri])
        purpose:    to start execution of the selected component of an
                    alternative process
```

It will be understood that the microinstruction ROM 13 contains microinstructions corresponding to all the above listed functions and operations whereby the processor is caused to carry out any of the above actions as a result of microinstructions derived from the ROM 13.

Scheduling

The processor shares its time between a number of concurrent processes executing at the two different priority levels 0 and 1. A priority 0 process will always execute in preference to a priority 1 process if both are able to execute. At any time only one of the processes is actually being executed and this process which is the current process has its workspace pointer (WPTR) in the WPTR REG 51 and an instruction pointer (IPTR) in the IPTR REG 50 indicates the next instruction to be executed from the sequence of instructions in the program relating to that particular process. Any process which is not the current process and is not awaiting execution is descheduled. When a process is scheduled it either becomes the current process or is added to a list or queue of processes awaiting execution. Such a scheduled list is formed as a linked list with each process on the list having a pointer in the link location 66 of its workspace to the workspace of the next process on that list. The instruction pointer (IPTR) of any process on the list is stored in the IPTR location 65 of its workspace as shown in Figure 4.

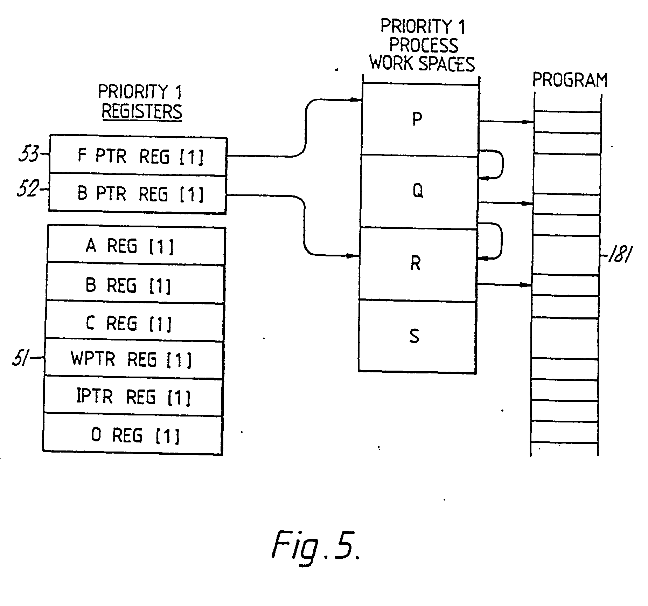

In the present case, the processor may maintain two lists of scheduled processes which are waiting to be executed, one for each priority level. In addition it may maintain two timer lists of descheduled processes awaiting specified times before being scheduled, one timer list being provided for each priority. Figure 4 indicates the high priority 0 scheduled list whereas Figure 5 shows a low priority 1 scheduled list at a time when a priority 0 process is the current process as shown in Figure 4. As the current process in this case is a high priority 0 process, the register bank selector 41 has selected the registers in bank 39 for use by the processor. Consequently WPTR REG [0] holds a pointer to the 0 location of the workspace 60 of the current process L as indicated in Figure 4. The IPTR REG [0] contains a pointer to the next instruction in the program sequence 181 which is stored in memory. The registers 54, 55, 56 and 57 indicated in Figure 4 contain other values to be used during execution of the current process L. The scheduled list of priority 0 processes which are awaiting execution is indicated in Figure 4 by the three processes M, N and 0 whose workspaces are indicated diagrammatically at 61, 62 and 63. Each of these workspaces is generally similar to that indicated for process L. The FPTR REG [0] marked 53 contains the pointer to the workspace of process M which is the process at the front of this list. The workspace of process M contains in its IPTR location 65 a pointer to the next instruction in the program sequence which is to be executed when process M becomes the current process. The link location 66 of process M contains a pointer to the workspace of process N which is the next process on the list. The last process on the list indicated is process 0 which has its workspace indicated at 63. The BPTR REG [0] marked 52 contains a pointer to the workspace of this last process 0. The workspace 63 of this process 0 is pointed to by the contents of the link location 66 of the previous process N but in this case the link location 66 of process 0 does not contain any pointer as this is the last process on the list.

When a further process is added to the list a pointer to the workspace of that further process is placed in the BPTR REG 52 and the link location 66 of the process 0 then contains a pointer to the workspace of the further process which is added to the list.

The priority 1 scheduled list is generally similar and this is indicated in Figure 5. In this case the list of priority 1 processes which have been scheduled and are awaiting execution consists of the processes P, Q and R. A further priority 1 process marked S is shown but this is currently descheduled and does not form part of the linked list. The FPTR REG [1] contains a pointer to the workspace of process P which forms the first process on the list awaiting execution. The BPTR REG [1] contains a pointer to the workspace of process R which forms the last process on the scheduled list. Each of the processes P, Q and R has an IPTR in its IPTR location pointing to the program stage from which the next instruction is to be taken when that process becomes the current process. The link location of each process apart from the last process on the scheduled list contains a pointer to the workspace of the next process on the list.

A process may be taken from the top of a list for execution by use of the procedure "dequeue" which has been defined already.

A current process may be descheduled by the procedure "start next process" which has been defined already.

The manner of operating the two scheduled process lists illustrated in Figures 4 and 5 has already been described in the above mentioned patent applications and will not be repeated.

The present embodiment does however provide a time slicing facility such that if the current process is a low priority process it may be stopped after a period of time called a "time slice" and rescheduled at the end of the queue illustrated in Figure 5 so as to allow the opportunity for other processes on the scheduled list to be executed. When a low priority process is taken from the top of a scheduled list of the type shown in Figure 5, the processor executes the procedure "dequeue" and as can be seen from lines 11 and 12 of the definition of that procedure, if the process is a priority 1 process (which will be the case for a low priority process) then according to line 12, the TIME SLICE REG 80 is loaded with a value which is the sum of the present time indicated by the CLOCK REG 81 together with the time required "length of time slice". The length of a time slice may be chosen to suit any appropriate time interval and in the present case it is taken to be the time needed to execute 1000 instructions. This may of course be varied as necessary. This time slice is stored in the constants box 40. When the low priority process executes a "jump", function or a "loop end" operation, the processor carries out the procedure "time slice" as can be seen from the end of the definition of both the jump function and the loop end operation. In accordance with the above definition of the procedure "time slice" the processor checks that if the priority of the current process is 1 and the time indicated by the CLOCK REG is equal to or after the time indicated by the TIME SLICE REG 80 then the sequence is carried out in which the workspace pointer and priority of the current process is loaded into the PROC DESC REG 46 and the procedure "run" is carried out so that the process is rescheduled by adding it to the end of the priority 1 scheduled list. The procedure also sets the SNPFlag 58 to the value 1 so that the processor ceases executing the current process and starts to execute a further process from the top of the priority 1 scheduled list unless there is any process or request of higher priority requiring action by the processor.

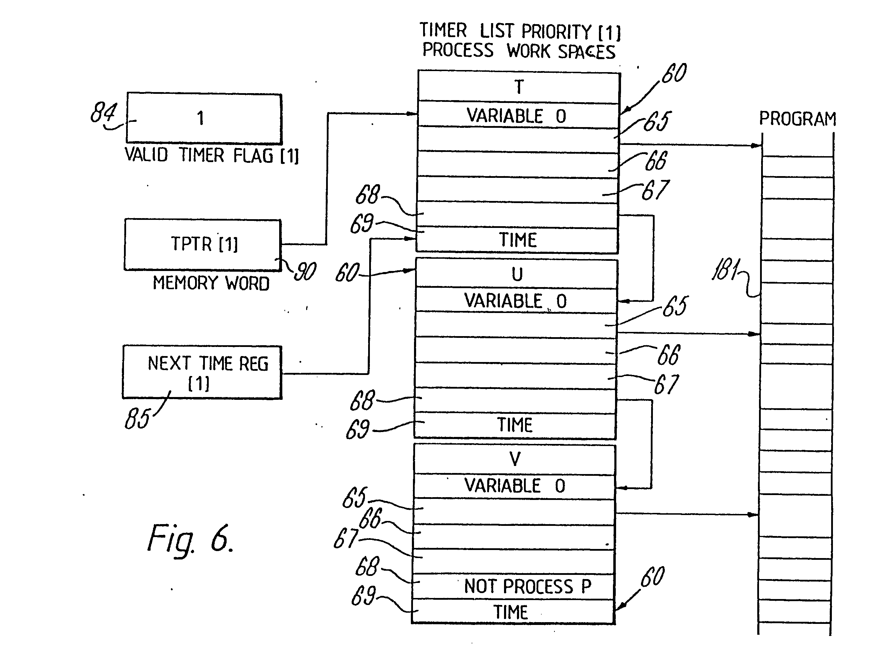

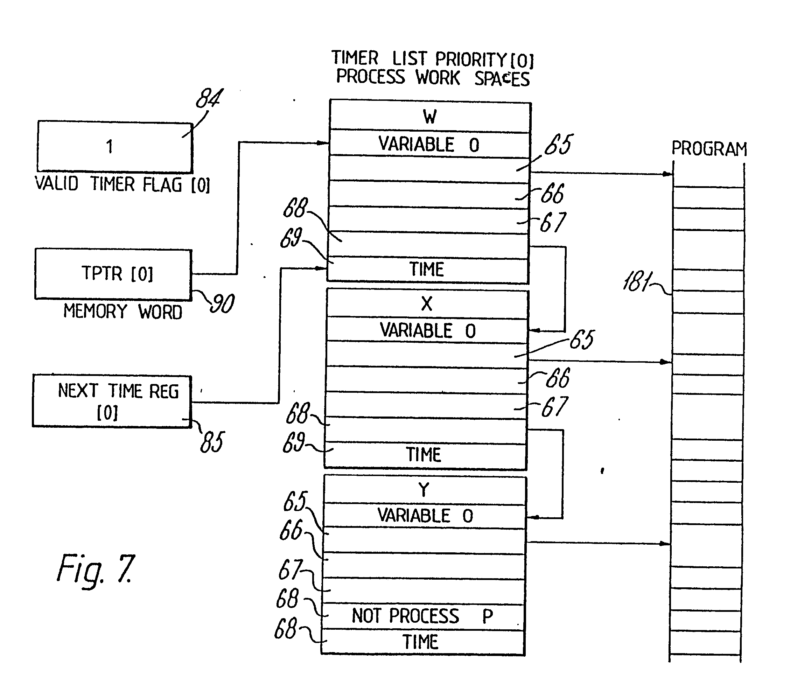

The present embodiment also makes provision for timer lists of the type shown in Figures 6 and 7. Figure 6 illustrates a linked timer list of low priority 1 processes whereas Figure 7 shows a similar linked list of high priority 0 processes. The low priority processes have been marked in Figure 6 with the letters T, U and V whereas the high priority processes of Figure 7 have been given the letters W, X and Y. The two lists are generally similar and for this reason only the list of Figure 6 will be described in detail. The workspace 60 for each of the processes in the list is indicated in Figure 6. The front of the timer list is maintained by a single word memory location 90 which holds a pointer value called TPTR. When there are no processes on a timer list of particular priority, the TPTR for that priority is set to the special value "NotProcess.p". Otherwise the TPTR held in the memory location 90 points to the "variable 0" location (also called 0 location) of the workspace 60 of the first process on the timer list. This is illustrated in Figure 6. The processes in the timer list are all linked in a time ordered manner. Each process workspace contains a value in the time location 69 indicating the time at which the process may be scheduled. The TLink location 68 of each process workspace includes a pointer to the 0 location of the workspace of the next process on the timer list. Location 65 of each process workspace on the list stores a pointer to the next instruction in the program sequence 181 for use when the process is scheduled and becomes the current process. The VALID TIME FLAG 84 is set to the value 1 when there are processes on the timer list and has the value 0 if there are no processes on the timer list. The NEXT TIME REG 85 contains the time taken from location 69 of the process at the front of the timer list. In this way the register 85 contains an indication of the earliest time at which any of the processes on the associated timer list should be scheduled. No register is provided for the timer list to indicate the back of the list. The workspace of the last process on the timer list has the special value "NotProcess.p" in the TLINK location 68 of its workspace. The front of the list is indicated by use of the memory location 90 rather than a register. In this way the front of the list is identified by use of a memory location in the same way as all intermediate entries on the list are identified and this simplifies the actions necessary to insert or delete further processes onto the timer list in a sequentially time ordered manner. It will be appreciated that it may become necessary to insert a process before the existing first process on the timer list or it may be necessary to insert it partway through the list depending on the time at which the process to be inserted is to be scheduled.

As can be seen from the previous description of the timer logic shown in Figure 3, if either of the VALID TIME FLAGS 84 are set to the value 1 indicating that there is a process on the appropriate priority timer list, then the timer logic shown in Figure 3 compares the times shown in the NEXT TIME REG 85 (indicating the first time for scheduling any of the processes on the list) with the time indicated by the CLOCK REG 81 and if the time for scheduling that first process has arrived, the timer logic provides an appropriate request signal to the condition multiplexor 36. The processor responds to such request signals by removing the first process from the appropriate timer list and updating the appropriate VALID TIME FLAG, NEXT TIME REG and TPTR location 90. This then reflects the new state of the timer list. The value "TimeSet.p" is written into the TLINK location 68 for the process workspace in order to indicate that the process is no longer on the timer list. Provided that the process is not already the current process or already on a scheduled list, it will become added to a scheduled list of the type shown in Figure 4 or Figure 5 or become the current process is there is no scheduled list. The actions of the processor in removing a process from the top of a timer list are set out in the above definition of "HandleTimerRequest".

Timer Input Instruction

A process may perform an instruction including "TimerInput" by loading the time after which the process should be rescheduled into the AREG 54 and then executing the operation "TimerInput". Firstly the processor checks whether the current time indicated by the CLOCK REG is after the time indicated by the AREG and if so no action occurs so that the process remains scheduled. If however this condition is not met the sequence specified in the definition of "TimerInput" occurs in that the special value "Waiting.p" is written into the STATE LOCATION 67 of the process workspace. The time at which the process should be rescheduled is to be after that shown in the AREG and consequently the time indicated in the AREG is incremented by 1 to indicate the time at which the process should be rescheduled. The processor carries out the procedure "InsertInTimerList" which writes into the time location 69 of the process workspace the time at which the process should be rescheduled and it causes the process to be fitted into the appropriate timer list at a position in that list such that the processes follow a time ordered sequence. It also sets the SNPFlag to a value 1 so that the processor starts executing another process. The process which executed the "TimerInput" instruction will be rescheduled when an appropriate amount of time has passed.

Alternative Timer Input Instructions

In the above mentioned copending applications, alternative processes are described. Such alternative processes select one of the number of alternative components for execution. Each component of the alternative consists of an input or a skip followed by a corresponding process. The present example is able to execute a timer alternative process which selects one of a number of alternative components for execution. Each component of the timer alternative may consist of a message channel input (from either an internal channel or an external channel), a skip or a timer input followed by a corresponding process. A message channel input component may be selected if the channel is ready and a skip component may always be selected as described in the above referred to copending patent applications. A timer input component may be selected when the value in the CLOCK REG is AFTER the time specified in the timer input. The present example executes alternative processes which are not dependent on a timer input in precisely the same manner as has already been described in the above mentioned copending patent applications and that description will not be repeated in this specification. When a current process has a number of alternative components, each component is examined to determine if one or more of them can be selected. If no component can be selected, the process is descheduled until one of them can be selected. The process will then be rescheduled, the components reexamined and one of them selected. The examination of message channel input components and skip components is performed as described in the above mentioned copending patent applications. When all components have been examined the state location 67 of the process workspace contains one of the two special values "Enabling.p" or "Ready.p". If and only if the state location 67 contains "Ready.p" can one of these component processes be selected. During the examination of timer input components, the TLink and Time Locations 68 and 69 respectively are used for special purposes. The TLink location 68 takes one of the two special values "TimeSet.p" or "TimeNotSet.p". It is initialised to "TimeNotSet.p" indicating that no timer input has yet been examined and changes to "TimeSet.p" when the first timer input is examined. When the first timer input is examined, the time location 69 is initialised to the time specified. Subsequently when each timer input is examined, the time location is updated to the time specified if that time is earlier than the time recorded in the time location 69. Consequently when all components have been examined, the time location 69 holds the earliest time specified by any timer input. The alternative process can select a timer input component if and only if the TLink location 68 contains the value "TimeSet.p" and the value of CLOCK REG is AFTER the time in the time location 69.

When all the components have been examined, the Timer Alternative process determines if any component can be selected using the State, TLink and Time locations 67, 68 and 69. If no component can be selected the process is descheduled and if any timer input component has been examined, the process is placed on the appropriate timer list. When there is at least one component which can be selected each component is reexamined and the first selectable component is selected. As described in the above mentioned copending patent applications, the 0 location of the process workspace 60 is used to record which if any component has been selected. The reexamination of channel input components and skip components is performed as described in the above mentioned copending patent applications. The reexamination of the timer input components is as follows using the TLink and Time Locations 68 and 69. If the Timer Alternative process is not on the timer list when the first timer input component is reexamined then either the process had been placed on the timer list and had subsequently been removed or the process had not been placed on the timer list at all. In the former case the Time Location 69 contains the time at which the earlier timer input component became selectable. In the latter case the Time Location 69 contains the value of "CLOCK REG" immediately after examination of the component processes. The Time Location retains the same value for all reexaminations of the timer input components. A timer input component will be selectable if and only if the content of the time location 69 is AFTER the specified time. If the Timer Alternative process is still on the timer list when the first timer input component is reexamined, there is no selectable timer input component but there must be a selectable channel input component. In this case the first reexamination of a timer input component removes the process from the timer list and sets the TLink location 68 to the value "TimeNotSet.p" preventing the selection of any timer input component. In this case no use is made of the Time Location 69.

The instructions which implement timer alternative processes are "timer alternative start" followed by "enable timer" for each of the timer components. The processor will also execute "enable channel" for each and every message channel if they are incorporated in the alternative construction. This is followed by "timer alternative wait" and then "disable timer" for each of the timer inputs and "disable channel" for any channel inputs. This is followed by the operation "Alternative End".

The first instruction executed by a timer alternative process is the "timer alternative start" operation and as can be seen from the definition of that operation, in accordance with line 2 the special value "enabling p" is written into the state location 67 for the process and in accordance with line 3, the special value "TimeNotSet.p" is written into the TLink location 68 for the process workspace.

Any channel input components and skip components are examined by "enable channel" and "enable skip" operations as described in the above mentioned copending patent applications. Any timer input components are examined by loading a guard value into the AREG and the specified time for the timer component into the BREG and then executing an "enable timer" operation. In accordance with the definition of that operation, lines 2 and 3 check whether the guard value in the AREG is false. If it is false the timer input component is to be ignored and the instruction has no other effect. Provided the guard value is not false in accordance with line 5 of the definition, the processor carries out the sequence beginning at line 7 of the definition. This loads into the OREG the value taken from the TLink location 68 and line 8 effects an examination to test whether the value is "TimeNotSet.p" in accordance with line 9 or "TimeSet.p" in accordance with line 13. If it is found that the value is "TimeNotSet.p", then the value "TimeSet.p" is written into the TLink location in accordance with line 11 and the time indicated in the BREG is written into the time location 69 for the process workspace as required by line 12 of the definition. This will occur for the first timer input component examined by the process. For subsequent timer inputs which are examined the condition of line 13 may be met in which case the sequence following line 14 occurs. Line 15 requires that the time value recorded in the time location 69 for the process is loaded into the OREG 57 and the value of this time is tested to see whether it meets the condition of line 17 of the definition. If that time is AFTER the time indicated in the BREG then the time in the BREG is written into the time location 69 for the process. Lines 19 and 20 indicate that if the time indicated in the OREG was not AFTER the time indicated in the BREG no action is taken. Finally the BREG is loaded with the value from the CREG as required by line 21 of the definition. In this way the process examines each of the possible timer inputs and the time location 69 of the process is updated so that after the examination it contains the time of the earliest timer component. It will therefore be seen that the succession of "enable timer" operations for each of the timer components effectively determines the earliest time of any of the components and progressively updates the time location 69 with the earliest time of any of the examined components.

The process then executes the operation "timer alternative wait". In accorance with line 2 of the definiation this initialises the 0 location of the process workspace to the value −1 and then tests to determine if any component of the alternative process is already selectable. In accordance with lines 3 and 4 of the definition it reads into the BREG the value from the TLink location 68 and reads into the AREG the value from the Time location 69. Lines 5 and 6 require that if the process had the value "TimeSet.p" and the CLOCK REG shows a time AFTER the time indicated in the time location 69 of the process then the sequence defined in lines 8 and 9 occurs. The special value "Ready.p" is written into the state location 67 for the process and the current time indicated by the CLOCK REG is written into the time location 69 for the process. The process is not descheduled and may move onto its next instruction. If however the condition of line 6 of the definition was not true then the process moves to line 12 of the definition. It tests the contents of the state location 67 for the process by loading this into the CREG and line 14 tests whether this contains the value "Ready.p". If so then in accordance with line 16 the current time indicated by the CLOCK REG is written into the time location 69 for the process and the process is not descheduled. It is ready due to another of the alternative inputs and the process may move on to the next instruction. However, if according to line 16 of the definition the special value "enabling.p" had been found from the state location of the process this would indicate that none of the alternative components is yet ready and the sequence beginning at line 17 occurs. The special value "waiting.p" is written into the state location 67 for the process and lines 19 and 20 test if the process is awaiting a timer component. If according to line 20 the process has the value "TimeSet.p" then the content of the AREG is incremented by 1 in order to indicate the time when the process should be scheduled and according to line 23 the procedure "Insert In Timer List" is carried out. This will have the effect of putting the process onto the appropriate priority timer list so that the process is descheduled but contains an indication of the time when it should be rescheduled. In accordance with line 24 of the definition, the BREG may have the value "TimeNotSet.p" if the process is not awaiting any timer components and this will arise where the process is still awaiting a channel input rather than a timer input. In this situation the sequence following line 25 occurs and the instruction pointer for the process is stored in the IPTR location 65 of the process workspace and the SNPFlag is set to the value 1 so that the process is descheduled. It will therefore be seen that in the definition lines 6 to 9 test whether the process is ready because of a time input. Lines 13 and 14 test if the process is ready due to a non-timer input e.g. a channel input. Line 16 onwards is applicable where the process is not found ready.

The next instruction carried out by the process if it is not descheduled or when it is subsequently rescheduled, will be to effect the operation "disable timer" for each of the timer components, "disable skip" for any skip components and "disable channel" for any channel components. The channel input components and skip components are reexamined by the "disable channel" and "disable skip" operations as described in the above mentioned copending patent applications. The timer alternative process reexamines the timer input components in accordance with the definition of the operation "disable timer". Initially the AREG is loaded with a code offset to indicate the offset necessary in the program sequence in order to locate subsequent program instructions should that alternative component be selected by the process. A guard value is loaded into the BREG and the CREG is loaded with the time at which the process is to be scheduled. Line 2 of the definition checks whether the guard value is false and if so then this component cannot be selected and the AREG is loaded with the value MachineFALSE. Provided the guard was not false the process examines the content of the TLink location 68 for the process. There are three cases to consider. Firstly the TLink location may contain the value "TimeSet.p" in accordance with line 10 of the definition in this case the component is selectable if the time in the time location 69 is AFTER the specified time in the CREG. This is the condition in line 14 of the definition and if met then the process carries out the procedure "IsThisSelectedProcess". In accordance with lines 5 and 6 of the definition of that procedure, it checks whether or not the 0 location of the process workspace contains the value −1. If it does then this component is selected and in accordance with line 8 of the definition the 0 location of the workspace is loaded with the code offset from the AREG. If the 0 location of the workspace did not have the value −1 in accordance with line 10 of the procedure definition then a component process has already been selected and the present one cannot be selected.

If the "disable timer" operation finds that the TLink location 68 of the process contains a value other than "TimeSet.p" or "TimeNotSet.p" this corresponds to the situation in line 18 of the definition of "disable timer". This will arise when the process is still on a timer list such that the TLink location 68 includes a pointer to a further process on the list. The timer component is therefore not selectable as the process is still waiting on a timer list and the process is removed from the timer list by the procedure "delete from timer list". This causes the value "TimeNotSet.p" to be written into the TLink location 68 for the process.

The "disable timer" operation may find that the TLink location contains the value "TimeNotSet.p" in accordance with line 8 of the definition. In this case the TLink location 68 was set to this value by a previous "disable timer" operation which was executed while the process was on a timer list and so this component is not selectable. Consequently the AREG is set to the value MachineFALSE in accordance with line 9 of the definition.

When all of the alternative components have been reexamined, the process carries out the operation "Alternative End" and in accordance with that definition, it first loads into the OREG the code offset which has been stored in the 0 location of the process workspace and then adjusts the pointer value in the IPTR REG by the offset indicated in the OREG. This causes the process to select the next instruction in a program sequence with an offset appropriate to the alternative process selected.

Various example processes will now be described.

## Example 1

Firstly consider a priority 1 process executing a "timer input" instruction in a situation where the process is not descheduled. For example, the AREG may be loaded with a value for example 14 indicating that the process wishes to continue the clock register contains a value AFTER 14. If the instruction is executed at a time when the clock register contains the value 20, the processor will in accordance with the first two lines of the definition of "timer input" check whether the value in the clock register is after that indicated in the AREG. In this example that condition will apply and so the process will continue without descheduling the process.

## Example 2

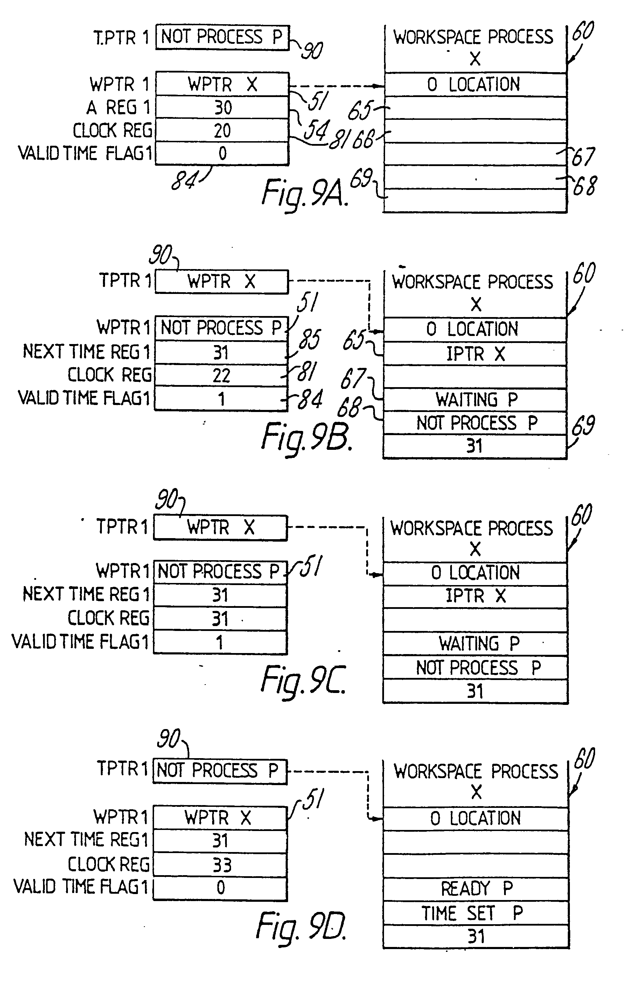

This illustrates the operation of "timer input" by a process which is descheduled and reference is made to Figures 9A to 9D. These indicate the changes in various word locations for the workspace 60 of process X and the contents of various register. Figure 9A shows the position immediately before execution of the "timer input" instructions. The AREG 54 contains the value 30 indicating that the process wishes to be scheduled only when the time in the CLOCK REG 81 is AFTER 30. The CLOCK REG currently contains the time value 20 and the valid time flag 84 is set to 0 indicating that there are no processes on the priority 1 timer list. When the "timer input" operation is executed the contents of the clock register are compared with the contents of the AREG. As the value in the clock register is not AFTER the value in the AREG the process must be descheduled. As is set out from line 5 onwards of the definition of "timer input" the special value "waiting.p" is written into the state location 67 of the process X and the value in the AREG is incremented so that it contains the time at which the process should be scheduled. The process is then inserted into the timer list and the position is as shown in Figure 9B. The CLOCK REG has now incremented to 22. The valid time flag 84 is now set to the value 1 indicating that there is at least one process on the timer list. The NEXT TIME REG 85 contains the value 31 which is the time at which the first process on the timer list should be scheduled and the TPTR location 90 contains the workspace pointer of process X being the first (and only) process on the timer list. The workspace of process X contains its instruction pointer (IPTR) in location 65, the special value "waiting.p" in location 67, special value "not process.p" in location 68 indicating that this is the last process on the timer list and the value 31 in location 69 indicating the time at which the process can be rescheduled.

When sufficient time has passed and the clock register has incremented to the value 31 the position is as shown in Figure 9C. As the value of the CLOCK REG now equals the value of the NEXT TIME REG and the valid time flag is set to the value 1, the timer logic will generate a time request to the processor. This causes the processor to load the PROCPRI register with the value 1 and perfom the "HandleTimeRequest" procedure. This will cause process X to be scheduled and the valid time flag to be cleared and the TPTR location 90 to be set to "not process.p" and this is the position shown in Figure 9D.

## Example 3

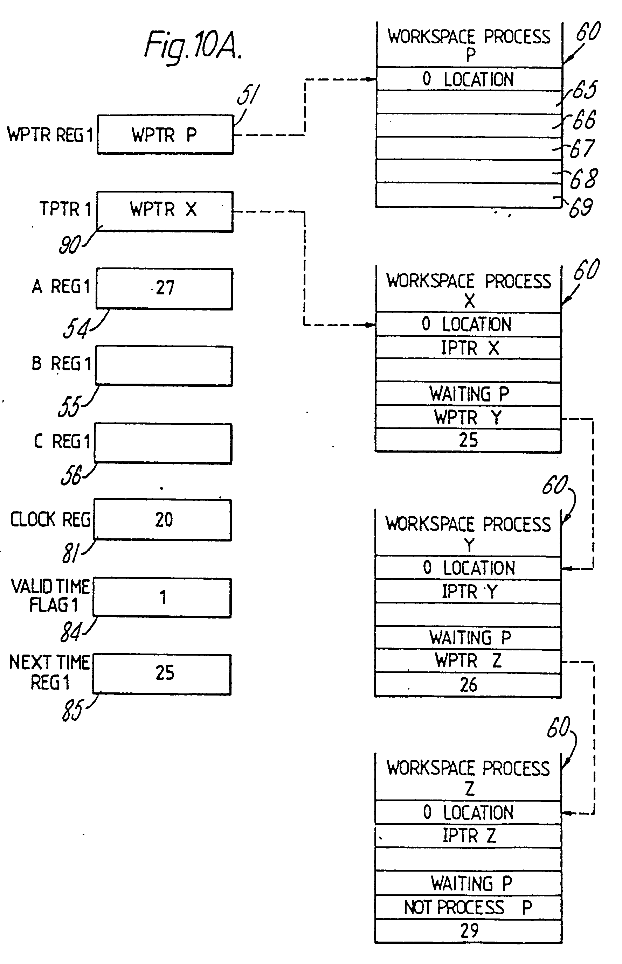

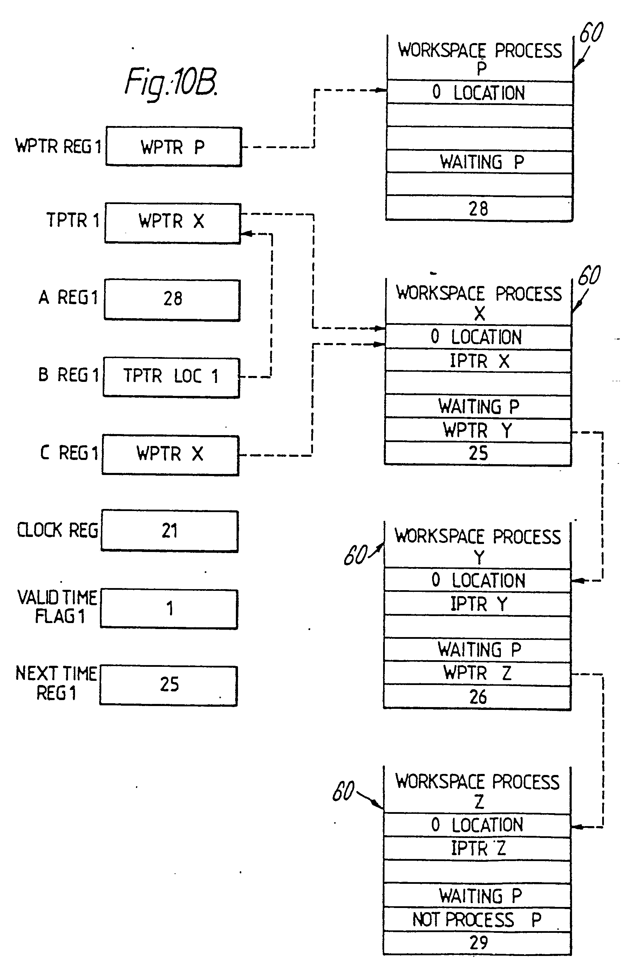

This example illustrates how the insert flag 82 is used to cause a process to be inserted into the timer list at the correct position in a time ordered sequence. A process P performs a timer input operation which causes it to be descheduled. It is assumed that process P is a priority 1 process and is the only process executing. It is further assumed that there are three other processes waiting on the priority 1 timer list, these are process X waiting for time 25, process Y waiting for time 26 and process Z waiting for time 29. Figure 10A illustrates the position just before executing the timer input instruction. Process P is executing and the AREG contains the time 27. The CLOCK REG contains the time 20. The valid time flag is set to the value 1 indicating that the timer list is in use and the NEXT TIME REG contains the value 25 indicating that the time associated with the earliest process on the timer list is 25. It can be seen that there are three processes on the timer list. The TPTR location 90 contains a pointer to the first of these which is process X. The TLink location 68 of process X contains a pointer to the second process Y which in turn contains a pointer to the third process Z. The TLink location 68 of process Z contains a special value "Not Process.p" indicating that process Z is the last process on the timer list. It can be seen that the timer list is ordered with the earlier process first and the latest process last. When process P executes the timer input instruction, the CLOCK REG and the AREG are compared and as the CLOCK REG is not yet AFTER the AREG a special value "waiting.p" is written into the state location 67 of process P, the AREG is incremented by 1 and the procedure "insert in timer list" is carried out. This causes the value in the AREG to be written into the time location 69 of the workspace of process P, the insert flag is set to the value 1, the BREG is set to point at the TPTR location 90 and the CREG is set to the contents of the TPTR location 90. The timer input instruction then terminates and the state is as shown in Figure 10B.

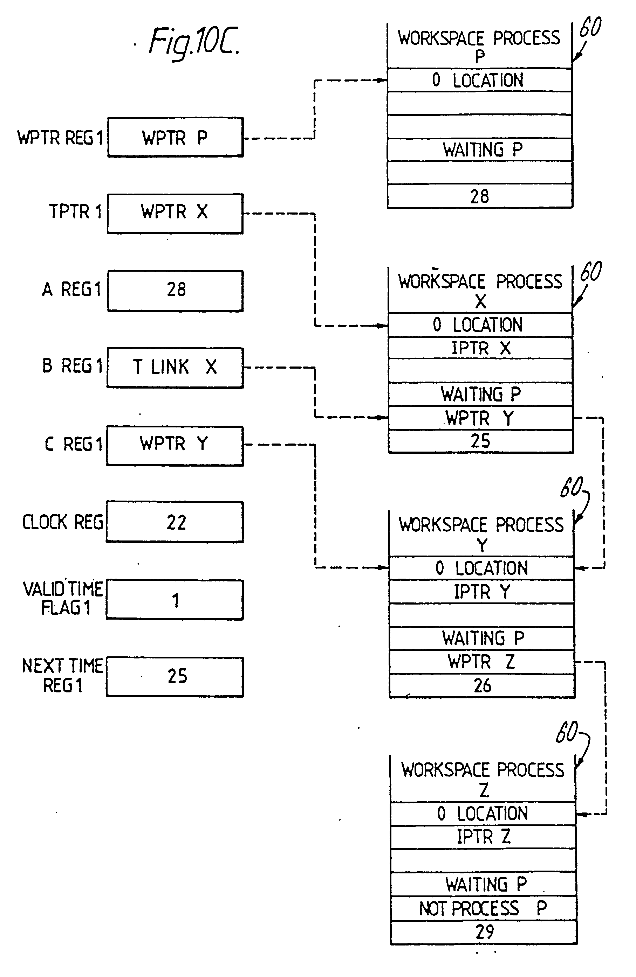

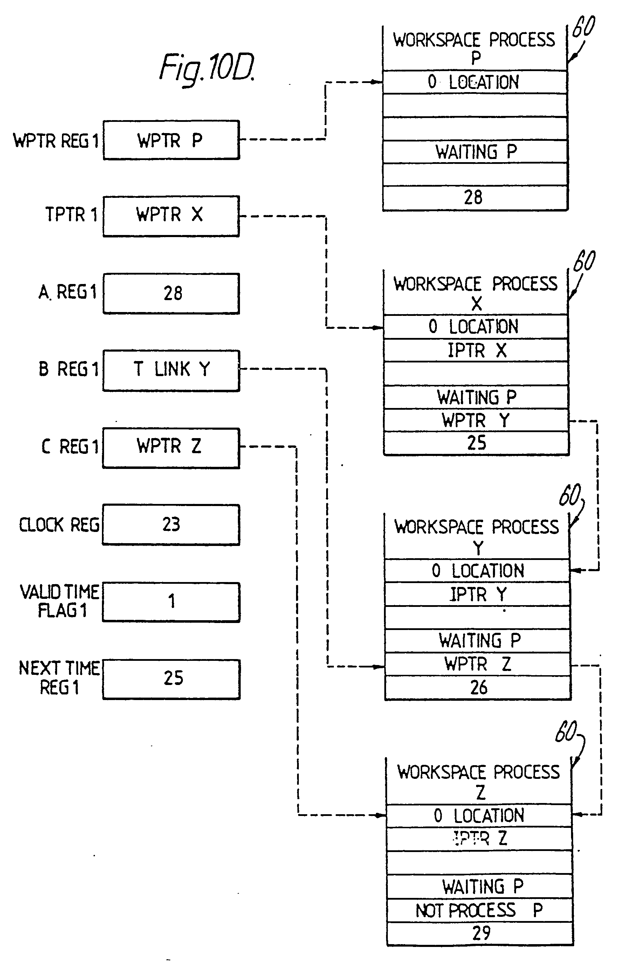

As the insert flag is set to the value 1 the next action that is performed by the processor is the procedure "insert step". As can be seen from the definition of this procedure this causes the TREG 49 to be loaded with the time associated with process X (that is 25) and will compare that with the time associated with process P (that is 28). Since 28 AFTER 25 the processor has not yet found the correct place to insert process P into the timer list and the "insert step" procedure causes the BREG to be set to a pointer to the TLink location 68 of process X and the CREG is set to the contents of that location. The procedure then terminates leaving the insert flag set. The resulting situation is shown in Figure 10C. The next action of the process will be to perform the procedure "insert step" again. This will be executed in a similar manner to that previously described and will result in the situation shown in Figure 10D.

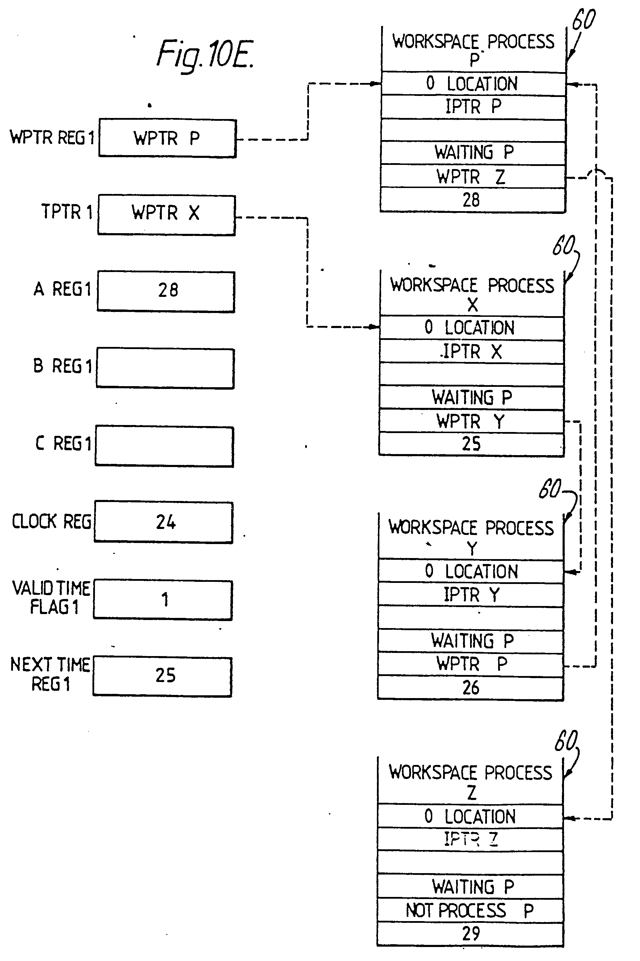

Once again the next action of the processor will be to execute the procedure "insert step". However on this occasion, the time associated with process Z (that is 29) is AFTER the time associated with process P (that is 28) and so the processor clears the insert flag and inserts process P into the timer list between process Y and process Z by writing the workspace pointer of process P into the TLink location 68 of process Y and writing the workspace pointer of process Z into the TLink location 68 of process P. The processor then resets the NEXT TIME REG 85 to the time associated with the first process on the timer list and sets the valid time flag to the value 1. Finally the processor writes the instruction pointer of process P into the IPTR location 65 of process P and sets the SNPFlag 5B to the value 1 to cause process P to be descheduled as the next action of the processor. The resulting situation is shown in Figure 10E.

Example 4

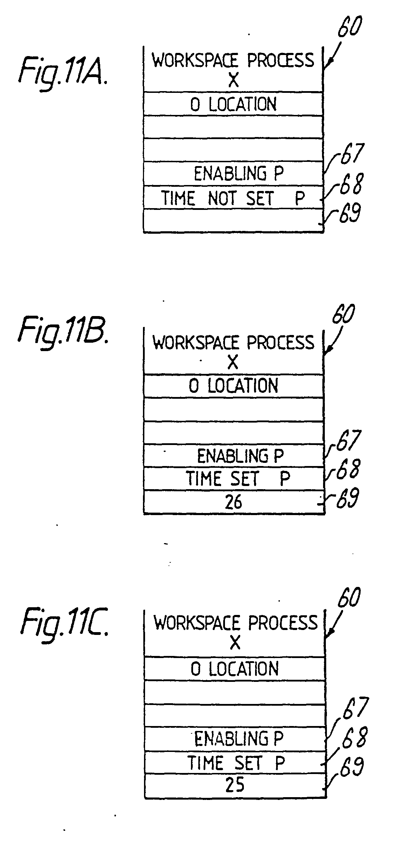

This illustrates a timer alternative process X with two timer input components. It is assumed that process X is the only runnable process, the process X has priority 1 and the time specified in the first timer input component is 26 and the second timer input component is 25. This is illustrated in Figures 11A to 11C. These show successive states for the workspace locations 67 to 69 of the process workspace 60. Figure 11A shows the position immediately after executing the "timer alternative start" instruction. The state location 67 contains the special value "enabling.p" and the TLink location 68 contains the special value "TimeNotSet.p". Just before the first "enable timer" instruction is executed the AREG will contain the value MachineTRUE and the BREG will contain the time associated with this timer input which is 26. When the enable timer instruction is executed the processor reads the TLink location 68 and finds that it contains the value "TimeNotSet.p" indicating that no timer input component has previously been examined. The processor therefore sets the TLink location 68 to the special value "TimeSet.p" and the time location 69 to the value 26. This is the position shown in Figure 11B. Immediately before the second "enable timer" instruction is executed the AREG will contain the value MachineTRUE and the BREG will contain the value 25 being the time associated with the second timer input component. When the enable timer instruction is executed the process reads the TLink location 68 and finds that it contains the value "TimeSet.p" indicating that the time location contains the earliest time associated with any previous timer input component. The processor therefore reads the time location 69 and determines that the time specified for this component which is 25, is earlier than the time read from the time location which contains the value 26. The processor therefore writes the new value 25 into the time location and the position is as shown in Figure 11C.

Example 5

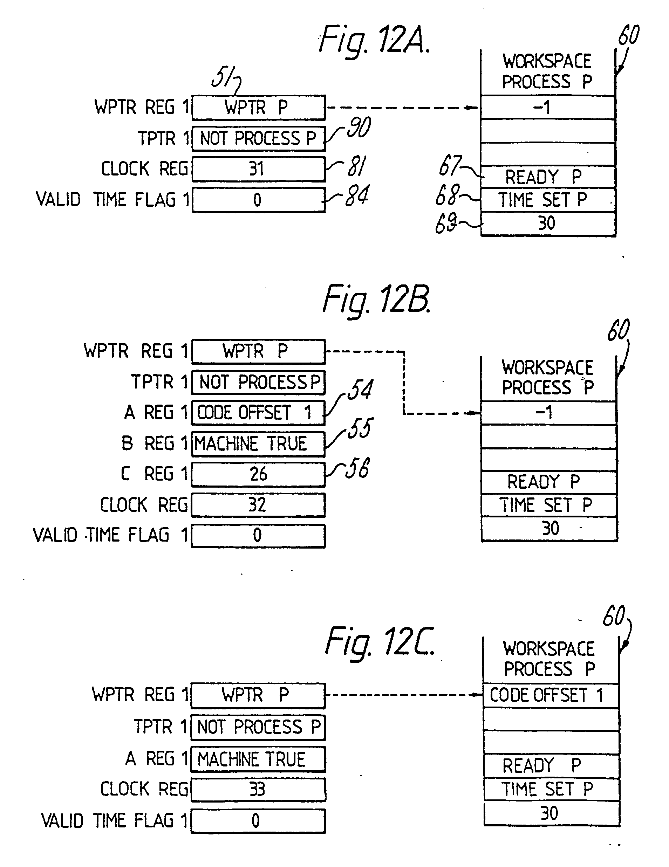

This example which is shown in Figures 12A to 12C illustrates a timer alternative process P with two timer input components where the process P is not descheduled. It is assumed that process P is the only runnable process, that it is a priority 1 process and that the time specified in the first timer input component is 26 and the time of the second timer input component is 25. Execution of the "timer alternative start" instruction and the examination of the timer input components is as previously described in Example 4 and the situation immediately before executing the "timer alternative wait" instruction is as shown in Figure 11C. The first action of the "timer alternative wait" is to write the value -I into the 0 location of the workspace 60 of the process P. This is the location used to select a component from a plurality of alternatives. The processor next determines that process P can continue without descheduling as the time in the CLOCK REG is after the time in the time location 69. The processor therefore writes the special value "Ready.p" into the state location 67 and the value of the clock register is written into the time location 69. This results in the position shown in Figure 12A although in that figure the clock register has now advanced to the value 31. The position just before the first "disable timer" instruction is illustrated in Figure 12B. The AREG contains the offset from the "Alternative End" instruction to the sequence of instructions in the program associated with the first timer input component, the BREG contains the value MachineTRUE and the CREG contains the time associated with this timer component which is 26. The process then executes the "disable timer" instruction which reads the TLink location 6B and determines that it contains the value "TimeSet.p". Consequently it reads the value 30 from the time location and as 30 is AFTER 26 this timer input component is selectable. The processor then performs the procedure "IsThisSelectedProcess" which will select this component as the 0 location of the process workspace still contains the value −1. The resulting situation is shown in Figure 12C. The second timer input component cannot now be selected and when the Alternative End instruction is executed the workspace for process P will still be as illustrated in Figure 12C.

### Example 6

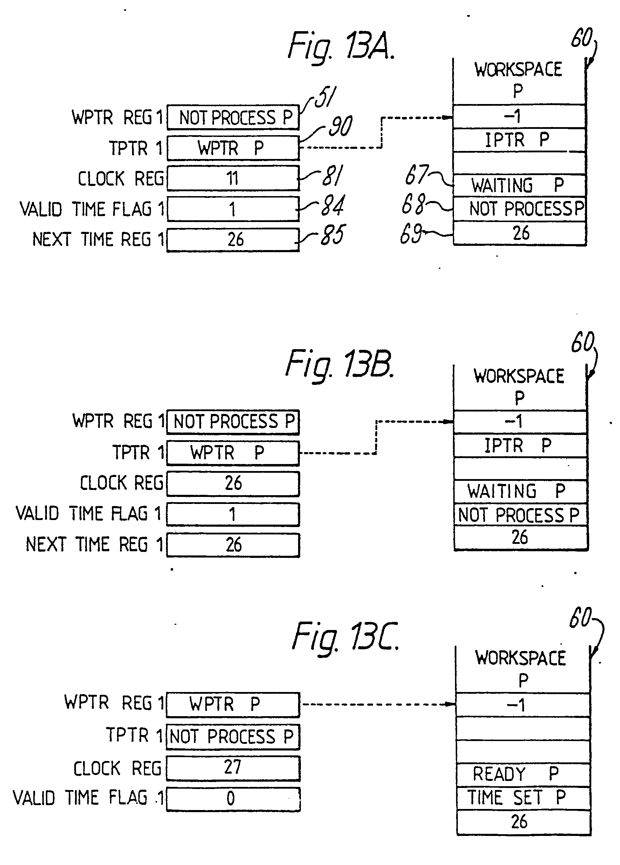

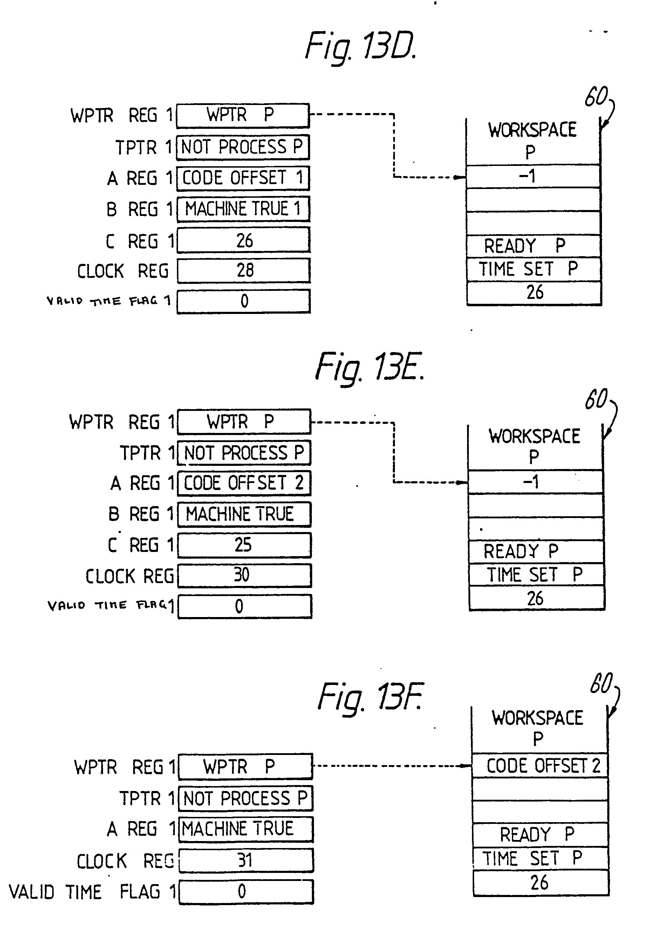

This example illustrated in Figures 13A to 13F shows a timer alternative process P with two timer input components where the process P is descheduled. It is assumed that process P is the only runnable process, that the process has priority 1, the time specified in the first timer input component is 26, the time specified in the second timer input is 25 and there are no processes on the timer list The execution of the "timer alternative start" instruction and the examination of the timer input components is as previously described in Example 4 and the position immediately before executing "timer alternative wait" instruction is as previously shown in Figure 11C. The first action of the "timer alternative wait" instruction is to write the value −1 into the zero location of the workspace of process P. The processor compares the value in the time location 69 with the value of the clock register and, finding that the process cannot proceed due to a timer input, checks the state location 67 of the process. As this contains "enabling.p" the process is placed on the timer list and descheduled. This is the position shown in Figure 13A. The valid time flag is set to the value 1 indicating that the timer list is not empty. The NEXT TIME REG contains the value 26 which is-the time at which process P will become ready to execute. The TPTR location 90 contains a pointer to the workspace of the process P and the TLink location 68 of process P contains the special value "not process.p" indicating that it is the last process on the list. When sufficient time has passed the timer will make a "timer request" signal to the processor as described in Example 2. The situation when the signal is made is as shown in Figure 13B. When the process has been rescheduled the position is as shown in Figure 13C. The situation immediately before executing the first " disable timer" instruction is as shown in Figure 13D. When the timer instruction is executed the TLink location 68 is read and found to contain "TimeSet.p". The processor then compares the time associated with this time component which is 26 with the time indicated in the time location 69 this time also being 26. As 26 is not AFTER 26 this component is not selectable. The processor therefore loads the value MachineFALSE into the AREG and the instruction terminates. The situation immediately before process P executes the second "disable timer" instruction is as illustrated in Figure 13E. The execution of this instruction will cause this component to be selected resulting in the situation as shown in Figure 13F.

### Example 7

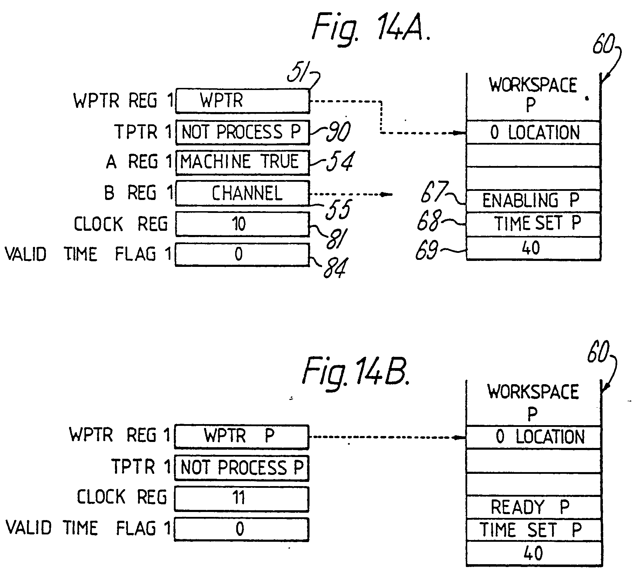

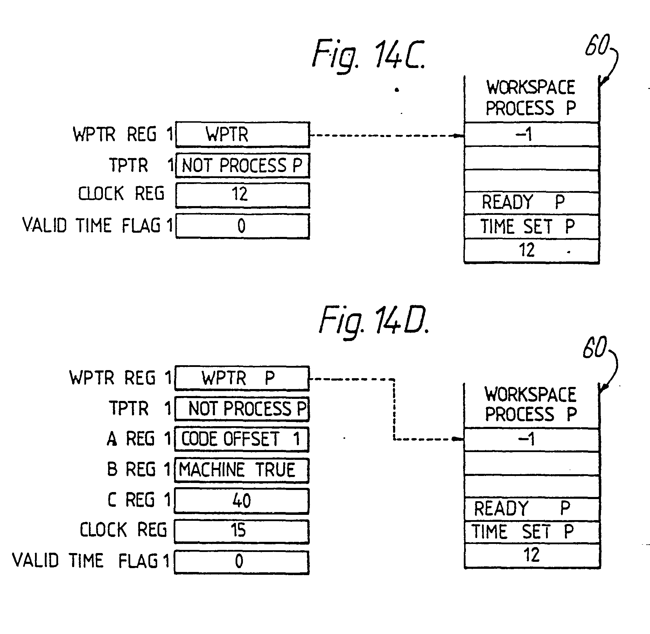

This illustrates a timer alternative process P with one timer input component and one message channel input component. It is assumed that process P is the only runnable process, that it has priority 1, and a specified time of 40. There are no processes on the timer list and the channel referred to by the channel input component is initially "Ready" and the timer input component is not selectable. This example is illustrated in Figures 14A to 14D. The process P executes a "timer alternative start" instruction, loads its registers appropriately and executes an "enable timer" instruction. The process then loads the registers in preparation for a "enable channel" instruction. This results in the situation shown in Figure 14A. As the channel is "Ready" the situation after execution of the "enable channel" instruction is as shown in Figure 14B. The process then executes a "timer alternative wait" instruction. The time in the CLOCK REG has the value 11 which is not AFTER the time 40 indicated in the time location 69 for the process P. Therefore the processor checks the state location 67 which contains the value "Ready.p" and consequently writes into the time location 69 the time value in the clock register. The situation on completion of the "timer alternative wait" instruction is as shown in Figure 14C. The situation immediately before the "disable timer" instruction is executed is as shown in Figure 14D. The timer input component will not be selected because the time value 12 in the time location 69 is not AFTER the time associated with the component. The process will then execute a "disable channel" instruction which will select the channel input component.

It will be seen from the above example that when "disable timer" instructions are carried out the time which is stored in the time location 69 of the process is a standard time which remains constant for all timer inputs on which the disable timer instruction is effected. This avoids different timer inputs being compared with a changing time due to the passage of time as successive "disable timer" instructions are effected.

### Example 8

This illustrates a process P which is a Timer Alternative process having one timer input component specifying a time of 40 and one channel input component through a channel 70. It is assumed for this example that there are initially two processes on a timer list these two processes specifying times of 34 and

28

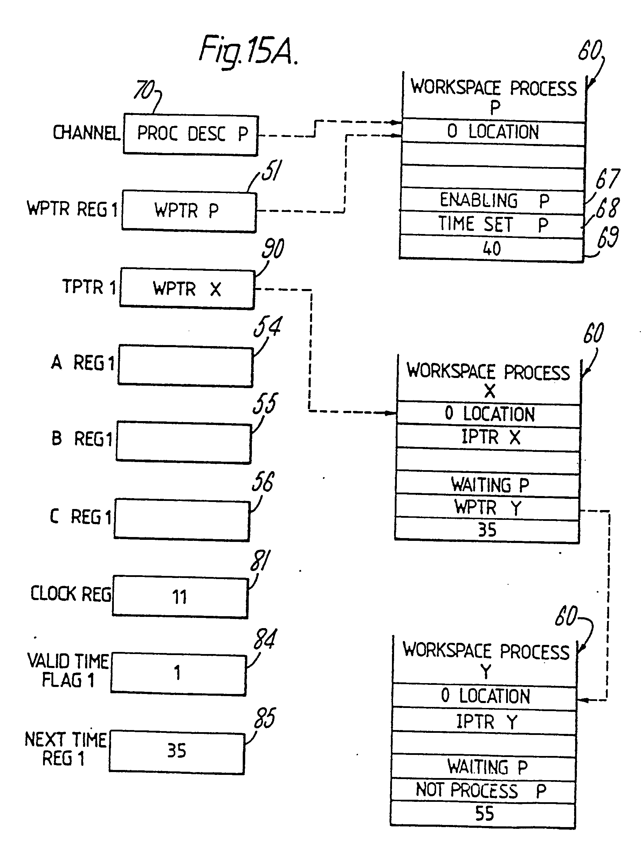

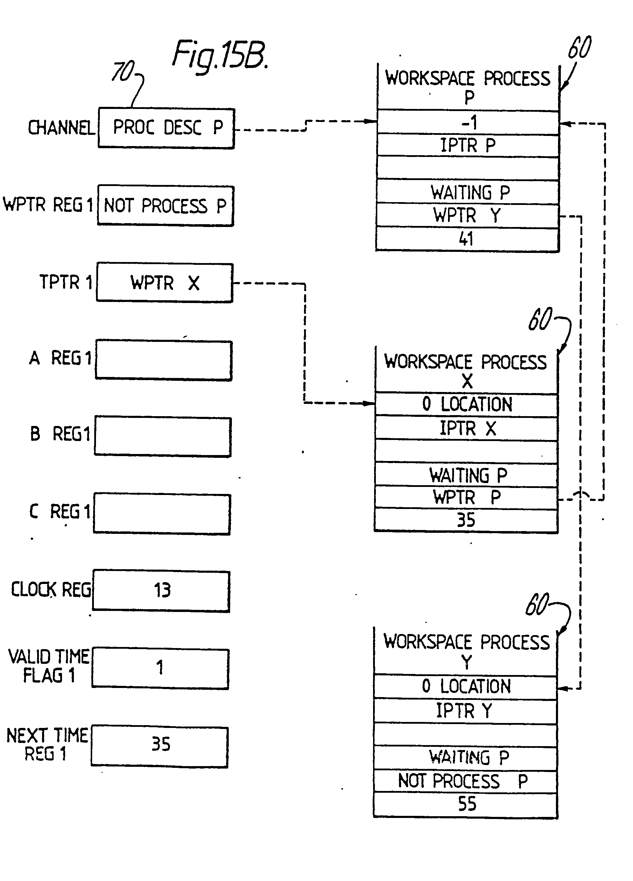

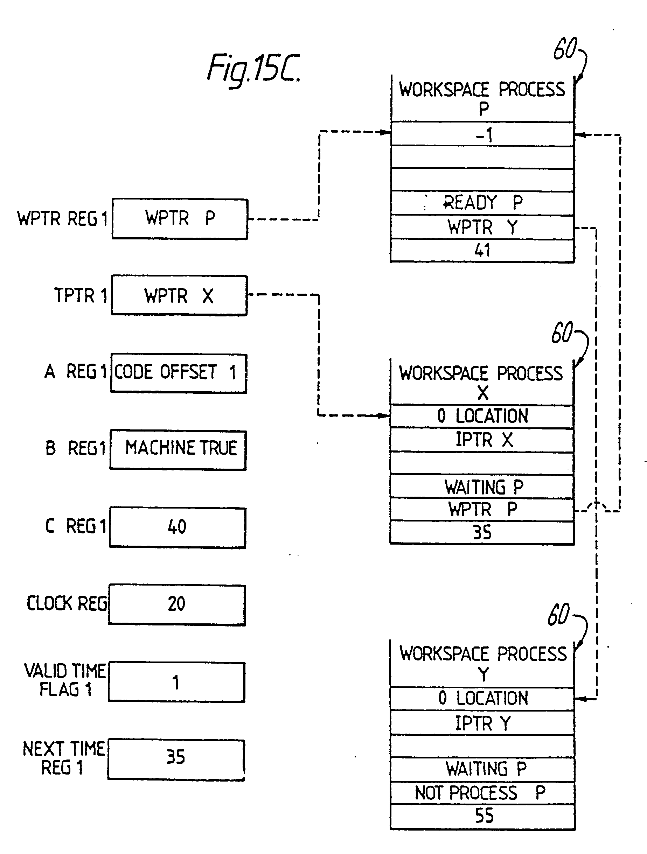

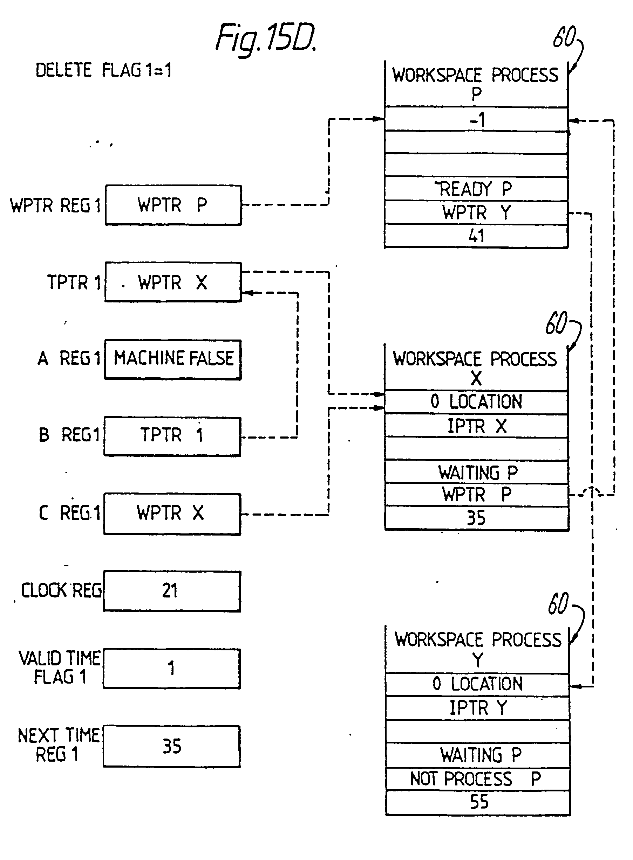

54. The message channel is initially not "ready" but becomes "ready" before the first process on the timer list becomes ready. In order to carry out the timer alternative process, the processor first executes a "timer alternative start" instruction, an "enable timer" operation for the one timer input component and an "enable channel" operation on the channel 70. The position is then as shown in Figure 15A. The process P is not yet descheduled, the "state" location 67 has been initialised to "enabling.p" to indicate that the process is carrying out an alternative input. The TLink location 68 has been set to the value "TimeSet.p" indicating that a timer input has been examined. The "Time" location 69 has been set to the earliest time of any timer input examined which in this case is 40 being the only timer input examined. The timer list has two descheduled processes X and Y with scheduling times of 35 and 55 respectively. The processor then executes a "timer alternative wait" instruction for process P. This will find from the "state" location 67 of process P that there was no channel input which was "ready" and as the CLOCK REG contains the time 11 in Figure 15A, the time has not yet arrived for the process P to proceed with the timer input and consequently process P is inserted into the timer list and is descheduled. This results in the position shown in Figure 15B. The linked timer list now has all three processes X, P and Y in a time ordered sequence. At some later time the channel 70 becomes "ready" due to an outputting process attempting to output through that channel. As the channel contains the process descriptor of process P, process P becomes scheduled and loads its registers prior to executing a "disable timer" instruction resulting in the situation shown in Figure 15C. The process then executes a "disable timer" operation and this reads the "TLink location" 68 for process P and determines that the process is still on a timer list as it contains the workspace pointer to the next process on the timer list. As process P is still on the list the time for that timer input component has not arrived and consequently the timer component is not selectable. The AREG is therefore set to MachineFALSE and the procedure "delete from timer list" is performed. This sets the DELETE FLAG to the value 1 loads, the BREG with a pointer to the TPTR location 90 and loads the CREG with the contents of the TPTR location 90. The instruction then terminates leaving the position as shown in Figure 15D. As the DELETE FLAG is set to the value 1 the next action of the processor is to perform the procedure "delete step". As the TPTR location contains the workspace pointer of process X, it will be the workspace pointer of process X which is first loaded into the CREG and consequently in carrying out the procedure "delete step" the condition of line 2 of the definition of "delete step" will apply in that the CREG does not contain the workspace pointer of process P.

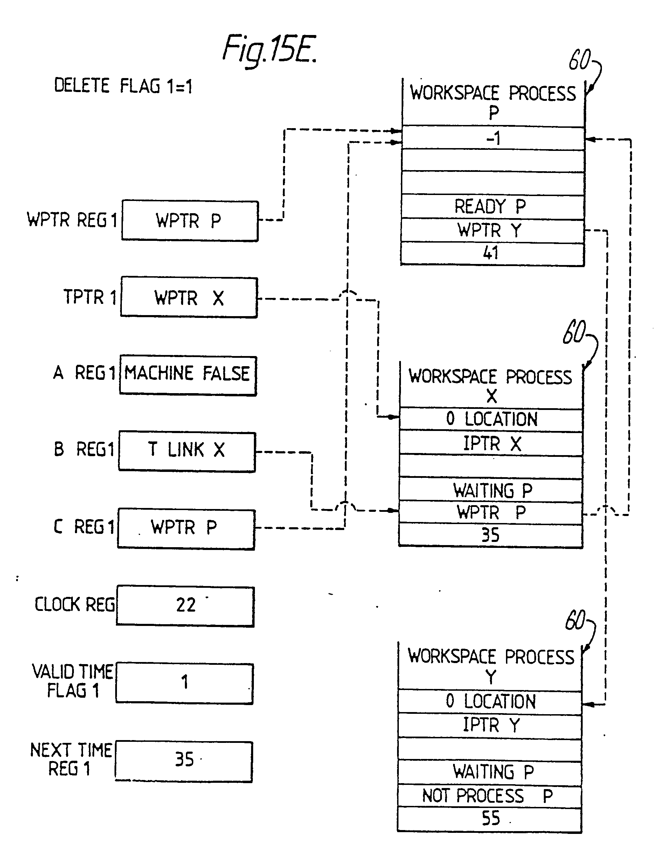

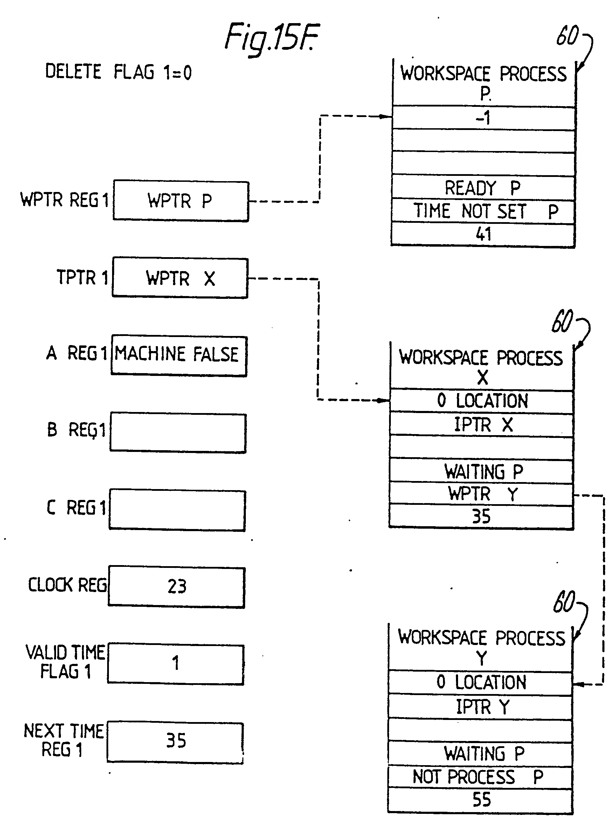

Therefore, in accordance with lines 5 and 6 of the definition of "delete step", the process will step on to the next process in the timer list by loading the BREG with a pointer to the TLink location of process X and loading the CREG with the contents of the location pointed to by the BREG, that is a pointer to the workspace of process P. This is the situation shown in Figure 15E. The procedure "delete stop" then terminates and as the DELETE FLAG is still set, the next action of the processor is to perform the procedure "delete stop" again. It will now be found that the condition of line 7 of the procedure "delete step" applies in that the CREG will now contain the workspace pointer of the current process which is process P. This indicates that the process to be deleted from the list has now been found and in accordance with line 9 of the definition of "delete step" the DELETE FLAG is cleared to 0. This prevents further deletion steps through the timer list. In accordance with lines 10 and 11 of the definition of "delete step", process P is removed from the timer list by loading into the CREG the value currently held in the TLink location 68 for process P (that is a pointer to the workspace pointer of process Y) and then writing the value from the CREG into the location indicated by the BREG which is the TLink location for process X. In other words the contents of the TLink location of process X are changed to replace the pointer to the workspace of process P by a pointer to the workspace of process Y. The processor then checks whether there are any processes left on the timer queue by following line 13 of the "delete step" procedure in which the BREG is loaded with the contents of the TPTR location. If in accordance with line 15 of the definition, this has the value "not process.P" then there are no processes left on the list. The valid time flag is then set to zero in accordance with line 17. If, on the other hand, a value other than "not process.P" was found in accordance with line 18 of the definition then there is a further process on the timer list and the NEXT TIME REG is updated by taking the time from the Time location 69 of the process indicated by the BREG in accordance with line 20 of the definition. Finally after deleting the process P from the timer list the value "TimeNotSet.p" is written into the TLink location 68 of process P in accordance with line 21 of the definition of the procedure "delete step". This results in the position shown in Figure 15F. The process P is no longer on a timer list but is still the current scheduled process. It therefore executes the next instruction which will be "disable channel". This will find the value −1 in the 0 location of the workspace of process P and consequently channel 70 will be selected for the input to the process. The appropriate code offset will be loaded into the 0 location of the workspace for process P so that on completing the next instruction "Alternative End" the code offset will be added to the instruction pointer for process P so that the process moves to the correct part of the program in accordance with the selection of the channel input.

Example Program for Process carrying out an Alternative Input from a Message Channel or Timer

This example program is arranged to calculate the number of revolutions made per second by a flywheel. The Process is arranged to communicate through two channels one called "rotation" and the other called "rps" which represents revolutions per second. The process is arranged to input from the channel "rotation" whenever the flywheel completes a revolution. The process may also receive a timer input so that the process may respond to the occurrence of a predetermined time. In this example the predetermined time is the successive passage of one second intervals. The process is arranged to output each second through the channel "rps" the number of revolutions which have occurred during that second. In the program the following additional notation is used:

The current value of the processor's clock is represented NOW. The occam process

$$variable: = NOW$$

assigns the current value of the processor's clock to the variable.

A "timer" input is represented as

```
WAIT NOW AFTER t
```

This input specifies that the process may not proceed until the processor clock holds a time AFTER the time t.

The program for this process is as follows:-

```
1.   VAR EndOfInterval, Rotations :
2.   SEQ
3.      Rotations := 0
4.      EndOfInterval := NOW
5.      EndOfInterval := EndOfInterval + 10000
6.      WHILE TRUE
7.        ALT
8.          Rotation ? ANY
9.            Rotations := Rotations + 1
10.         WAIT NOW AFTER EndOfInterval
11.           SEQ
12.             rsp ! Rotations
13.             Rotations := 0
14.             EndOfInterval := EndOfInterval + 10000
```

Line 1 of the program specifies that the process uses two variables one of which is called "Rotations" which is used to count the number of rotations occurring in a one second interval and the other variable "EndOfInterval" is used to record the value of the processor's clock which will indicate the termination of the current one second interval. Line 2 specifies that a sequence is to be followed as set out in lines 3 to 6. In line 3 the count of number of rotations is set to 0. In line 4 the current value of the processor's clock is read so that line 5 can calculate the value of the processor's clock for the end of the one second interval. The value 10000 used in line 5 is the number of times the processor's clock increments in one second.

Line 6 indicates that the alternative process which follows between lines 7 and 14 is to be repeated continuously. Line 7 identifies the process as a timer alternative process. Lines 8 and 10 set out the two alternative inputs. Line 8 may input a signal from the channel "Rotation" if the flywheel has completed a rotation. If this input is selected then the corresponding process on line 9 is executed which increments the number of rotations counted in the current one second interval. The timer input on line 10 can be selected when the current one second interval has been completed. If this timer input to the process is selected then the corresponding process on lines 12, 13 and 14 will be executed. Line 12 provides an output through the channel "rsp" indicating the count of the number of rotations which have occurred in the one interval. Line 13 resets the rotation counter to 0 and line 14 calculates the time of the end of the next one second period.

The instruction sequence for implementing this program is as follows:-

Instruction Sequence                                Program in occam language

| No. | Instruction | | Function code | Data | Program in occam language |
|---|---|---|---|---|---|
| | | | | | VAR EndOfInterval, Rotations: |
| | | | | | SEQ |
| 1. | ldc | 0 | 7 | 0 | Rotations:= 0 |
| 2. | stl | 4 | 1 | 4 | |
| 3. | pfix | 1 | 14 | 1 | EndOfInterval := NOW |
| 4. | opr | ldtimer | 13 | 15 | |
| 5. | stl | 3 | 1 | 3 | |
| 6. | ldl | 3 | 0 | 3 | EndOfInterval := EndOfInterval |
| 7. | pfix | 2 | 14 | 2 | + 10000 |
| 8. | pfix | 7 | 14 | 7 | |
| 9. | pfix | 1 | 14 | 1 | |
| 10. | adc | 10000 | 8 | 0 | |
| 11. | stl | 3 | 1 | 3 | |
| 12. L1: | | | | | WHILETRUE |
| 13. | pfix | 2 | 14 | 2 | ALT |
| 14. | opr | talt | 13 | 1 | |
| 15. | ldlp | 1 | 2 | 1 | Rotation ? ANY |
| 16. | ldc | 1 | 7 | 1 | |
| 16a. | pfix | 1 | 14 | 1 | |
| 17. | opr | enbc | 13 | 13 | |
| 18. | ldl | 3 | 0 | 3 | WAIT NOW AFTER EndOfInterval |
| 19. | ldc | 1 | 7 | 1 | |
| 20. | pfix | 2 | 14 | 2 | |
| 21. | opr | enbt | 13 | 3 | |
| 22. | pfix | 2 | 14 | 2 | |
| 23. | opr | taltwt | 13 | 2 | |
| 24. | ldlp | 1 | 2 | 1 | Rotation ? ANY |
| 25. | ldc | 1 | 7 | 1 | |
| 26. | ldc | (L2-L2) | 7 | 0 | |
| 26a. | pfix | 1 | 14 | 1 | |
| 27. | opr | disc | 13 | 14 | |
| 28. | ldl | 3 | 0 | 3 | WAIT NOT AFTER EndOfInterval |
| 29. | ldc | 1 | 7 | 1 | |
| 30. | ldc | (L3-L2) | 7 | 10 | |
| 31. | pfix | 2 | 14 | 2 | |
| 32. | opr | dist | 13 | 4 | |
| 32a. | pfix | 1 | 14 | 1 | |
| 33. | opr | altend | 13 | 10 | |

| Instruction Sequence | | | | Program in occam language |
|---|---|---|---|---|
| | | Function code | Data | |
| 34. L2: | | | | |
| 35. | ldlp 0 | 2 | 0 | Rotation ? ANY |
| 36. | ldlp 1 | 2 | 1 | |
| 37. | ldc 1 | 7 | 1 | |
| 38. | opr bcnt | 13 | 7 | |
| 38a. | pfix 1 | 14 | 1 | |
| 39. | opr in | 13 | 6 | |
| 40. | ldl 4 | 0 | 4 | Rotations := Rotations + 1 |
| 41. | adc 1 | 8 | 1 | |
| 42. | stl 4 | 1 | 4 | |
| 43. | j L4 | 9 | 14 | WAIT NOW AFTER EndOfInterval |
| 44. L3: | | | | SEQ |
| 45. | ldlp 4 | 2 | 4 | rsp ! Rotations |
| 46. | ldlp 2 | 2 | 2 | |
| 47. | ldc 1 | 7 | 1 | |
| 48. | opr bcnt | 13 | 7 | |
| 49. | pfix 1 | 14 | 1 | |
| 50. | opr out | 13 | 7 | |
| 51. | ldc 0 | 7 | 0 | Rotations := 0 |
| 52. | stl 4 | 1 | 4 | |
| 53. | ldl 3 | 0 | 3 | EndOfIntervals := |
| 54. | pfix 2 | 14 | 2 | EndOfInterval + 10000 |
| 55. | pfix 7 | 14 | 7 | |
| 56. | pfix 1 | 14 | 1 | |
| 57. | adc 10000 | 8 | 0 | |
| 58. | stl 3 | 1 | 3 | |
| 59. L4: | | | | |
| 60. | nfix 3 | 15 | 3 | |
| 61. | j L1 (-50) | 9 | 14 | |

As shown in this instruction sequence lines 1 and 2 initialise the count of the number of rotations to 0. Lines 3 and 4 use a pfix function in order to operate load timer to read the processor clock. Lines 6 to 11 use successive pfix functions and an add constant function to calculate the value of the processor's clock at the end of a one second interval. The timer alternative input begins at line 13, lines 13 and 14 use the pfix function in order to operate "timer alternative start". Line 15 loads a pointer to the channel "Rotation" and lines 16a and 17 use the pfix function to operate "enable channel". Line 18 loads the value of the variable "EndOfInterval". Line 19 loads the guard value and lines 20 and 21 use a pfix function to operate "enable timer". Lines 22 and 23 carry out "timer alternative wait". Lines 24 to 27 reexamine the channel input. Line 24 identifies the channel "Rotation". Line 25 loads the guard value MachineTRUE. Line 26 loads the instruction offset which will be necessary if the channel input is selected. Lines 26a and 27 carry out the operation "disable channel". Lines 28 to 32 reexamine the timer input. Line 28 loads the variable "EndOfInterval". Line 29 loads a guard value, line 30 loads the instruction offset which will be necessary if the process selects the timer input and lines 31 and 32 carry out "disable timer". Lines 32a and 33 carry out "Alternative End". Line 35 is the first instruction which will be executed if the channel input is selected. Line 45 is the first instruction which will be executed if the timer input is selected.

The invention is not limited to the details of the foregoing examples.

## Claims

1. A method of operating concurrent processes, at least some of which are time dependent processes, in a computer system wherein each concurrent process executes a program having a plurality of instructions, comprising the steps of forming a first pointer for each process to identify the process, forming a second pointer for each process to indicate a program stage for the process, scheduling a plurality of processes for execution by a processor including indicating a current process which is being executed by the processor, identifying a time dependent collection of processes to be executed by the processor, the process in said collection having the earliest scheduling time being indicated as the next process, characterised in that a respective scheduling time is provided for each process in the time dependent collection, and in that execution of said current process comprises executing a sequence of instructions including a time related instruction indicating a scheduling time before which the current process is not to continue execution and responding to execution of said time related instruction by (a) determining whether said scheduling time has yet arrived and (b) in response to determining that the scheduling time has not yet arrived (i) storing said second pointer for the process, (ii) stopping execution of the said current process, (iii) adding the stopped process to said time ordered collection at a position in the time ordered collection such that its scheduling time forms an ordered sequence of scheduling times in the collection, and (iv) setting the indication of the current process to indicate a further scheduled process, and at a time after the scheduling time of said next process, responding to execution of an instruction stopping the current process by setting the indication of the current process to indicate the said next process and executing said next process at a program stage indicated by the second pointer for the said next process.

2. A method according to claim 1 further characterised in that the current process continues execution without stopping when on execution of a time related instruction the step of determining whether said scheduling time has yet arrived indicates that the scheduling time has already arrived.

3. A method of operating concurrent processes as claimed in claim 1 or claim 2 further characterised by the steps of (a) establishing within the memory a respective workspace for each process, each workspace comprising a plurality of addressable memory locations, and recording in said locations of each workspace variables associated with the corresponding process, and (b) forming the time dependent collection by providing in the workspace of each process in the list an indication of a scheduling time for that process, and an indication of said first pointer for the process with the next scheduling time.

4. A method according to any one of claims 1, 2 or 3 further characterised in that the scheduling of a plurality of processes includes identifying a scheduled collection of processes not awaiting a scheduling time and ready for execution by the processor and wherein said next process is added to the scheduled collection and removed from the time dependent collection after its scheduling time.

5. A method according to claims 3 and 4 further characterised in that said scheduled collection is formed as a linked list, each process on the scheduled list having stored in its workspace an indication of the first pointer for the next process in the scheduled list.

6. A method according to any one of claims 1 to 5 further characterised by the steps of indicating a priority for each process and establishing first and second time dependent collections of processes, the first time dependent collection comprising processes of a common first priority and the second time dependent collection comprising processes of a common second priority different from said first priority.

7. A method according to any one of claims 1 to 5 further characterised by transmitting messages between concurrent processes through a plurality of addressable communication channels to permit data communication between processes, wherein each process executes a sequence of instructions in a program including communication instructions so as to complete message transmission between two processes when both are at corresponding program stages.

8. A method according to any one of claims 1 to 7 further characterised by executing a process having a plurality of alternative time related components, indicating a time associated with each component and determining whether the time associated with any of the components has yet occurred.

9. A method according to claim 8 further characterised by descheduling said process if the earliest time associated with any of the alternative time related components has not yet occurred and adding said process to a time dependent collection.

10. A method according to claim 8 or claim 9 further characterised by loading into a memory location associated with the process at least one special value to indicate the state of the process and to indicate that the process is one with alternative components.

11. A method according to claim 10 further characterised by loading into the memory location a first special value to indicate that the process need not be descheduled as at least one of the alternative components is ready, or a different special value to indicate that the process is descheduled while awaiting arrival of the time associated with one of the alternative components.

12. A method according to any one of claims 7 to 11 further characterised by loading into a memory location associated with the process a further special value to indicate that none of the alternative components has yet been selected and responding to said further special value in order to select one of the alternative process components when the process is scheduled.

13. A method according to any one of claims 7 to 12 further characterised in that at least one of said alternative components comprises inputting a message through a communication channel and the method includes determining whether the earliest time of any time related component has yet occurred and determining whether any communication channel is yet ready to input a message.

14. A microcomputer for use in carrying out the method of claim 1 which microcomputer comprises memory and a processor for executing a plurality of concurrent processes, at least some of said processes being time dependent, a scheduling system comprising an addressable storage element for indicating the current process which is being executed by the processor, and a timer list for identifying one or more processes which form a collection awaiting execution by the processor after respective scheduling times for the processes in said collection, said list having a next process indicator to indicate the next process in the collection for execution by the processor after its scheduling time occurs, characterised in that a set of storage locations (69) is associated with said timer list for indicating respective scheduling times when the processes in said collection become ready for execution, and a control system (13, 14, 15, 32) is provided for adding a further process to said collection at a time-ordered position between a preceding process having an earlier scheduling time and a following process having a later scheduling time.

15. A microcomputer according to claim 14 further characterised in that said memory provides for each process a respective workspace (60) having a plurality of addressable locations, each of said workspaces for a process on said time-ordered list including (i) first memory locations for recording variables associated with the corresponding process, (ii) a second memory location (65) for said program stage indicator for the corresponding process, and (iii) a third memory location (68) for indicating the next process on said time-ordered list.

16. A microcomputer according to claim 14 or claim 15 further characterised in that storage means (52, 53, 66) is provided to identify a collection of scheduled processes ready for execution by the processor (12) and to which a process may be added on removal from the timer list after its scheduling time has arrived.

17. A microcomputer according to claim 15 and claim 16 further characterised in that the workspace of each process is provided with an additional memory location (66) for indicating the next process in the scheduled collection so that the timer list and the scheduled collection each comprise a linked list through the process workspaces (60).

18. A microcomputer according to any one of claims 14 to 17 further characterised by addressable communication channels (70, 25) to permit synchronised message transmission between processes.

**Patentansprüche**

1. Verfahren zum Abarbeiten verzahnter Abläufe, von denen mindestens einige zeitabhängige Abläufe sind, in einer Rechneranlage, wobei jeder verzahnte Ablauf ein Programm mit einer Anzahl von Anweisungen durchführt, wozu die Schritte gehören, in denen für jeden Ablauf eine erste Hinweisadresse zum Kennzeichnen des Ablaufs gebildet wird, eine zweite Hinweisadresse für jeden Ablauf zur Anzeige eines Programmstadiums für den Ablauf gebildet wird, eine Anzahl von Abläufen zur Ausführung durch einen Prozessor zugeordnet wird, einschließlich der Angabe eines aktuellen Ablaufs, der vom Prozessor ausgeführt wird, der Kennzeichnung einer zeitabhängigen Sammlung von Abläufen, welche vom Prozessor auszuführen sind, wobei der Ablauf in dieser Sammlung mit der frühesten Zuordnungszeit als der nächste Ablauf angezeigt wird, dadurch gekennzeichnet, daß eine entsprechende Zuordnungszeit für jeden Ablauf in der zeitabhängigen Sammlung vorgesehen wird, und daß die Ausführung des aktuellen Ablaufs die Ausführung einer Folge von Anweisungen enthält, einschließlich einer zeitbezogenen Anweisung, welche eine Zuordnungszeit angibt, vor welcher der aktuelle Ablauf nicht weiter abgearbeitet werden darf, und auf die Ausführung dieser zeitbezogenen Anweisung dadurch reagiert, daß sie (a) bestimmt, ob diese Zuordnungszeit bereits eingetreten ist, und (b) aufgrund der Feststellung, daß die Zuordnungszeit noch nicht eingetreten ist, (i) die zweite Hinweisadresse für den Ablauf speichert, (ii) die Ausführung des aktuellen Ablaufs unterbricht, (iii) den unterbrochenen Ablauf zur zeitlich geordneten Sammlung an einer derartigen Stelle der zeitlich geordneten Sammlung hinzufügt, daß dessen Zuordnungszeit eine sequentiell geordnete Folge von Zuordnungszeiten in der Sammlung bildet, und (iv) die Anzeige des aktuellen Ablaufs derart setzt, daß sie einen weiteren geplanten Ablauf anzeigt, und zu einem Zeitpunkt nach der Zuordnungszeit dieses nächsten Ablaufs auf die Ausführung einer Anweisung zum Unterbrechen des aktuellen Ablaufs dadurch reagiert, daß sie die Anzeige des aktuellen Ablaufs derart setzt, daß sie den nächsten Ablauf anzeigt, und diesen nächsten Ablauf in einem Programmstadium ausführt, das durch die zweite Hinweisadresse für diesen nächsten Ablauf angeben ist.

2. Verfahren nach Anspruch 1, dadurch gekennzeichnet, daß der aktuelle Ablauf in seiner Ausführung ohne Unterbrechung fortfährt, wenn bei der Ausführung einer zeitbezogenen Anweisung der Schritt des Feststellens, ob die genannte Zuordnungszeit bereits eingetreten ist, erweist, daß diese Zuordnungszeit bereits eingetreten ist.

3. Verfahren zum Abarbeiten verzahnter Abläufe nach Anspruch 1 oder 2, zusätzlich gekennzeichnet durch folgende Schritte: (a) Einrichten eines entsprechenden Arbeitsbereichs im Speicher für jeden Ablauf, wobei jeder Arbeitsbereich eine Anzahl von adressierbaren Speicherplätzen umfaßt, und Aufnehmen der dem entsprechenden Ablauf zugehörigen Variablen in diese Speicherplätze jedes Arbeitsbereichs, sowie (b) Bilden der zeitabhängigen Sammlung durch Einsetzen einer Angabe der ersten Hinweisadresse für den Ablauf mit der nächsten Zuordnungszeit im Arbeitsbereich jedes Ablaufs in der Liste.

4. Verfahren nach einem der Ansprüche 1, 2 oder 3, dadurch gekennzeichnet, daß die Ablaufplanung für eine Anzahl von Abläufen die Kennzeichnung einer zeitgeplanten Sammlung von Abläufen umfaßt, welche keine Zuordnungszeit erwarten und zur Ausführung durch den prozessor bereitstehen, und wobei dieser nächste Ablauf zur zeitgeplanten Sammlung hinzugefügt und nach seiner Zuordnungszeit von der zeitabhängigen Sammlung weggenommen wird.

5. Verfahren nach Anspruch 3 und 4, dadurch gekennzeichnet, daß die zeitgeplante Sammlung als sequentielle Liste gebildet wird, wobei für jeden Ablauf auf der zeitgeplanten Liste in dessen Arbeitsbereich eine Angabe der ersten Hinweisadresse für den nächsten Ablauf in der zeitgeplanten Liste gespeichert ist.

6. Verfahren nach einem der Ansprüche 1 bis 5, gekennzeichnet durch folgende Schritte: Angeben einer Priorität für jeden Ablauf und Einrichten einer ersten und zweiten zeitabhängigen Sammlung von Abläufen, wobei die erste zeitabhängige Sammlung Abläufe von einer gemeinsamen ersten priorität und die zweite zeitabhängige Sammlung Abläufe von einer gemeinsamen zweiten Priorität enthält, welche von der ersten Priorität verschieden ist.

7. Verfahren nach einem der Ansprüche 1 bis 5, dadurch gekennzeichnet, daß Informationen zwischen verzahnten Abläufen durch eine Anzahl von adressierbaren Übertragungskanälen übertragen werden, um die Datenübertragung zwischen Abläufen zu ermöglichen, wobei jeder Ablauf eine Folge von Anweisungen in einem Programm ausführt, welches Übertragungsanweisungen enthält, um die Übertragung von Informationen zwischen zwei Abläufen auszuführen, wenn beide sich in entsprechenden Programmstadien befinden.

8. Verfahren nach einem der Ansprüche 1 bis 7, dadurch gekennzeichnet, daß ein Ablauf mit einer Anzahl von wahlweisen zeitbezogenen Bestandteilen ausgeführt wird, eine jedem Bestandteil zugeordnete Zeit angegeben wird, und ermittelt wird, ob der einem der Bestandteile zugeordnete Zeitpunkt bereits eingetreten ist.

9. Verfahren nach Anspruch 8, dadurch gekennzeichnet, daß der Ablauf aufgehalten wird, wenn der früheste einem der wahlweisen zeitbezogenen Bestandteile zugeordnete Zeitpunkt noch nicht eingetreten ist, und daß dieser Ablauf einer zeitabhängigen Sammlung hinzugefügt wird.

10. Verfahren nach Anspruch 8 oder 9, dadurch gekennzeichnet, daß in einen dem Ablauf zugeordneten Speicherplatz mindestens ein besonderer Wert eingegeben wird, um den Stand des Ablaufs anzugeben, und um anzuzeigen daß der Ablauf ein Ablauf mit wahlweisen Bestandteilen ist.

11. Verfahren nach Anspruch 10, dadurch gekennzeichnet, daß in den Speicherplatz ein erster besonderer Wert eingegeben wird, um anzuzeigen, daß der Ablauf nicht aufgehalten zu werden braucht, wenn mindestens einer der wahlweisen Bestandteile bereitsteht, oder ein anderer besonderer Wert, um anzuzeigen, daß der Ablauf aufgehalten wird, während er auf das Eintreten des einem der wahlweisen Bestandteile zugeordneten Zeitpunkts wartet.

12. Verfahren nach einem der Ansprüche 7 bis 11, dadurch gekennzeichnet, daß in einen dem Ablauf zugeordneten Speicherplatz ein weiterer besonderer Wert eingegeben wird, um anzuzeigen, daß noch keiner der wahlweisen Bestandteile abgerufen wurde, und daß auf diesen weiteren besonderen Wert reagiert wird, um einen der wahlweisen Ablauf-Bestandteile abzurufen, wenn der Ablauf zeitlich geplant ist.

13. Verfahren nach einem der Ansprüche 7 bis 12, dadurch gekennzeichnet, daß mindestens einer der wahlweisen Bestandteile die Eingabe einer Information durch einen Übertragungskanal umfaßt, und daß das Verfahren die Ermittlung enthält, ob der früheste Zeitpunkt eines zeitbezogenen Bestandteils bereits eingetreten ist, sowie die Ermittlung, ob bereits ein Übertragungskanal zum Eingeben einer Information bereit ist.

14. Mikrokomputer zur Verwendung bei der Durchführung des Verfahrens nach Anspruch 1, bestehend aus einem Speicher und einem Prozessor zur Durchführung einer Anzahl von verzahnten Abläufen, von denen mindestens einige zeitabhängig sind, einer Einrichtung zur Ablaufplanung mit einem adressierbaren Speicherglied zur Anzeige des aktuellen Ablaufs, der vom Prozessor ausgeführt wird, und aus einer Zeitablauf-Liste zur Kennzeichnung eines oder mehrerer Abläufe, die eine Sammlung bilden, welche die Ausführung durch den Prozessor nach den entsprechenden Planungszeiten für die Abläufe in dieser Sammlung abwartet, wobei diese Liste eine Anzeige für den nächsten Ablauf aufweist, um den nächsten Ablauf in der Sammlung zur Ausführung durch den Prozessor nach dem Eintreten seiner Zuordnungszeit anzugeben, dadurch gekennzeichnet, daß ein Satz von Speicherplätzen (69) der Zeitablauf-Liste zur Angabe entsprechender Zuordnungszeiten zugeordnet ist, wenn die die Abläufe in der Sammlung zur Ausführung anfallen, und daß eine Steuereinrichtung (13, 14, 15, 32) vorgesehen ist, um einen weiteren Ablauf zur Sammlung an einer zeitlich geordneten Stelle zwischen einem vorangehenden Ablauf mit einer früheren Zuordnungszeit und einem darauffolgenden Ablauf mit einer späteren Zuordnungszeit hinzuzufügen.

15. Mikrokomputer nach Anspruch 14, dadurch gekennzeichnet, daß der Speicher für jeden Ablauf einen entsprechenden Arbeitsbereich (60) mit einer Anzahl von adressierbaren Speicherplätzen bereithält, wobei jeder dieser Arbeitsbereiche für einen Ablauf auf der zeitlich geordneten Liste (i) erste Speicherplätze zum Speichern der dem entsprechenden Ablauf zugeordneten Variablen enthält, (ii) einen zweiten Speicherplatz (65) zur Anzeige des Programmstadiums für den entsprechenden Ablauf, sowie (iii) einen dritten Speicherplatz (68) zur Anzeige des nächsten Ablaufs auf der zeitlich geordneten Liste.

16. Mikrokomputer nach Anspruch 14 oder 15, dadurch gekennzeichnet, daß die Speichereinrichtung (52, 53, 66) vorgesehen ist, um eine Sammlung von zeitgeplanten Abläufen zu kennzeichnen, welche zur Ausführung durch den Prozessor (12) bereitstehen, und zu der ein Ablauf bei der Herausnahme aus der Zeitablauf-Liste nach dem Eintreten seiner Zuordnungszeit hinzugefügt werden kann.

17. Mikrokomputer nach Anspruch 15 und 16, dadurch gekennzeichnet, daß der Arbeitsbereich jedes Ablaufs mit einem zusätzlichen Speicherplatz (66) versehen ist, um den nächsten Ablauf in der zeitgeplanten Sammlung anzuzeigen, so daß die Zeitablauf-Liste sowie die zeitgeplante Sammlung jeweils eine sequentielle Liste durch die AblaufArbeitsbereiche (60) umfassen.

18. Mikrokomputer nach einem der Ansprüche 14 bis 17, zusätzlich gekennzeichnet durch adressierbare Übertragungskanäle (70, 25), um eine synchronisierte Übertragung von Informationen zwischen Abläufen zu ermöglichen.

## Revendications

1. Un procédé pour mettre en oeuvre des processus simultanés. dont certains au moins sont des processus qui dépendent du temps, dans un système d'ordinateur, dans lequel chaque processus simultané exécute un programme ayant un ensemble d'instructions, comprenant les opérations qui consistent à former un premier pointeur pour chaque processus de façon à identifier le processus, à former un second pointeur pour chaque processus de façon à indiquer une phase de programme pour le processus, à programmer un ensemble de processus pour l'exécution par un processeur, ceci comprenant l'indication d'un processus courant qui est en cours d'exécution par le processeur, et à identifier un groupe de processus dépendant du temps qui doivent être exécutés par le processeur, le processus dans ce groupe qui a l'instant de programmation d'exécution le plus précoce étant indiqué comme le processus suivant, caractérisé en ce qu'un instant de programmation d'exécution respectif est défini pour chaque processus dans le groupe dépendant du temps, et en ce que l'exécution du processus courant comprend l'exécution d'une séquence d'instructions comprenant une instruction liée au temps qui indique un instant de programmation d'exécution avant lequel le processus courant ne doit pas poursuivre l'exécution, et la réaction à l'exécution de cette instruction liée au temps par les actions suivantes: (a) on détermine si l'instant de programmation d'exécution est déjà arrivé et (b) lorsqu'on détermine que l'instant de programmation d'exécution n'est pas encore arrivé, (i) on enregistre le second pointeur pour le processus, (ii) on arrête l'exécution du processus courant, (iii) on ajoute le processus arrêté au groupe ordonné par rapport au temps, dans une position dans le groupe ordonné par rapport au temps qui est telle que son instant de programmation d'exécution forme une séquence ordonnée d'instants de programmation d'exécution dans le groupe, et (iv) on fixe l'indication du processus courant pour indiquer un processus programmé ultérieur, et à un instant qui fait suite à l'instant de programmation d'exécution du processus suivant, on réagit à l'exécution d'une instruction qui arrête le processus courant en fixant l'indication du processus courant pour indiquer le processus suivant, et en exécutant le processus suivant à une phase de programme qui est indiquée par le second pointeur pour le processus suivant.

2. Un procédé selon la revendication 1, caractérisé en outre en ce que le processus courant continue à être exécuté sans arrêt lorsqu'au moment de l'exécution d'une instruction liée au temps, l'opération qui consiste à déterminer si l'instant de programmation d'exécution est déjà arrivé, indique que l'instant de programmation d'exécution est déjà arrivé.

3. Un procédé pour mettre en oeuvre des processus simultanés selon la revendication 1 ou la revendication 2, caractérisé en outre par les opérations suivantes: (a) on établit à l'intérieur de la mémoire un espace de travail respectif pour chaque processus, chaque espace de travail comprenant un ensemble de positions de mémoire adressables, et on enregistre dans les positions de chaque espace de travail des variables associées aux processus correspondants, et (b) on forme le groupe dépendant du temps en incorporant dans l'espace de travail de chaque processus dans la liste une indication de l'instant de programmation d'exécution pour ce processus, et une indication du premier pointeur pour le processus qui a l'instant de programmation d'exécution suivant.

4. Un procédé selon l'une quelconque des revendications 1, 2 ou 3, caractérisé en outre en ce que la programmation de l'exécution d'un ensemble de processus comprend l'identification d'un groupe programmé de processus qui n'attendent pas un instant de programmation d'exécution et qui sont prêts à l'exécution par le processeur, et dans lequel le processus suivant est ajouté au groupe programmé et est retiré du groupe dépendant du temps, après son instant de programmation d'exécution.

5. Un procédé selon les revendications 3 et 4, caractérisé en outre en ce que le groupe programmé est réalisé sous la forme d'une liste enchaînée, chaque processus dans la liste programmée contenant dans un espace de travail une indication du premier pointeur pour le processus suivant dans la liste programmée.

6. Un procédé selon l'une quelconque des revendications 1 à 5, caractérisé en outre par les opérations qui consistent à indiquer une priorité pour chaque processus et à établir des premier et second groupes de processus dépendant du temps, le premier groupe dépendant du temps comprenant des processus d'une première priorité commune, et le second groupe dépendant du temps comprenant des processus d'une seconde priorité commune, différente de la première priorité.

7. Un procédé selon l'une quelconque des revendications 1 à 5, caractérisé en outre en ce qu'on transmet des messages entre des processus simultanés au moyen d'un ensemble de canaux de communication adressables, pour permettre une communication de données entre processus, dans lequel chaque processus exécute une séquence d'instructions dans un programme, comprenant des instructions de communication, de façon à accomplir des transmissions de messages entre deux processus lorsque tous deux sont à des phases de programme correspondantes.

8. Un procédé selon l'une quelconque des revendications 1 à 7, caractérisé en outre en ce qu'on exécute un processus qui comporte un ensemble de composantes alternatives liées au temps, on indique un instant associé à chaque composante, et on détermine si l'instant associé à l'une quelconque des composantes est déjà arrivé.

9. Un procédé selon la revendication 8, caractérisé en outre en ce qu'on déprogramme le processus si l'instant le plus précoce associé à l'une quelconque des composantes alternatives liées au temps n'est pas encore arrivé, et on ajoute ce processus à un groupe dépendant du temps.

10. Un procédé selon la revendication 8 ou la revendication 9, caractérisé en outre en ce qu'on charge dans une position de mémoire associée au processus au moins une valeur spéciale pour indiquer l'état du processus, et pour indiquer que le processus est un processus comportant des composantes alternatives.

11. Un procédé selon la revendication 10, caractérisé en outre en ce qu'on charge dans la position de mémoire une premiére valeur spéciale pour indiquer qu'il n'est pas nécessaire que le processus soit déprogrammé du fait que l'une au moins des composantes alternatives est prête, ou une valeur spéciale différente pour indiquer que le processus est déprogrammé pendant l'attente de l'arrivée de l'instant qui est associé à l'une des composantes alternatives.

12. Un procédé selon l'une quelconque des revendications 7 à 11, caractérisé en outre en ce qu'on charge dans une position de mémoire associée au processus une valeur spéciale supplémentaire pour indiquer qu'aucune des composantes alternatives n'a encore été sélectionnée, et on réagit à cette valeur spéciale supplémentaire en sélectionnant l'une des composantes alternatives du processus lorsque le processus est programmé pour l'exécution.

13. Un procédé selon l'une quelconque des revendications 7 à 12, caractérisé en outre en ce que l'une au moins des composantes alternatives comprend la réception d'un message par l'intermédiaire d'un canal de communication, et le procédé comprend l'opération qui consiste à déterminer si l'instant le plus précoce d'une composante quelconque liée au temps est déjà arrivé, et à déterminer si un canal de communication quelconque est déjà prêt pour recevoir un message.

14. Un micro-ordinateur prévu pour l'utilisation dans la mise en oeuvre du procédé de la revendication 1, ce micro-ordinateur comprenant une mémoire et un processeur pour l'exécution d'un ensemble de processus simultanés, certains au moins de ces processus dépendant du temps, un système de programmation d'exécution comprenant un élément de mémoire adressable pour indiquer le processus courant qui est en cours d'exécution par le processeur, et une liste de séquenceur destinée à identifier un ou plusieurs processus qui forment un groupe en attente d'exécution par le processeur, après des instants de programmation d'exécution respectifs pour les processus de ce groupe, cette liste ayant un indicateur de processus suivant pour indiquer le processus suivant dans le groupe qui doit être exécuté par le processeur, après que son instant de programmation d'exécution est arrivé, caractérisé en ce qu'un jeu de positions de mémoire (69) est associé à la liste de séquenceur pour indiquer des instants de programmation d'exécution respectifs lorsque les processus dans le groupe deviennent prêts pour l'exécution, et un système de commande (13, 14, 15, 32) est incorporé pour ajouter un processus supplémentaire au groupe, dans une position ordonnée par rapport au temps, entre un processus précédent ayant un instant de programmation d'exécution antérieur et un processus suivant ayant un instant de programmation d'exécution ultérieur.

15. Un micro-ordinateur selon la revendication 14, caractérisé en outre en ce que la mémoire procure pour chaque processus un espace de travail respectif (60) comportant un ensemble de positions adressables, chaque espace de travail pour un processus dans la liste ordonnée par rapport au temps comprenant (i) des premières positions de mémoire pour enregistrer des variables associées au processus correspondant, (ii) une seconde position de mémoire (65) pour l'indicateur de phase de programme pour le processus correspondant, et (iii) une troisième position de mémoire (68) pour indiquer le processus suivant dans la liste ordonnée par rapport au temps.

16. Un micro-ordinateur selon la revendication 14 ou la revendication 15, caractérisé en outre en ce que des moyens d'enregistrement (52, 55, 66) sont incorporés pour identifier un groupe de processus programmés, prêts à l'exécution par le processeur (12), et auquel un processus peut être ajouté lorsqu'il est retiré de la liste de séquenceur après que son instant de programmation d'exécution est arrivé.

17. Un micro-ordinateur selon la revendication 15 et la revendication 16, caractérisé en outre en ce que l'espace de travail de chaque processus comporte une position de mémoire supplémentaire (66) pour indiquer le processus suivant dans le groupe programmé pour l'exécution, de façon que la liste de sèquenceur comme le groupe programmé pour l'exécution comprennent respectivement une liste enchaînée portant sur les espaces de travail de processus (60).

18. Un micro-ordinateur selon l'une quelconque des revendications 14 à 17, caractérisé en outre par des canaux de communication adressables (70, 25) destinés à permettre une transmission de message synchronisée entre des processus.

Fig.1.

EP 0 183 877 B1

Fig. 2A.

PRIORITY 0
REGISTER BANK

PRIORITY 1
REGISTER BANK

LINKS

MEMORY
INTERFACE

INTERFACE
CONTROL LOGIC

SYNC
LOGIC

MADDR

DATA OUT

IB

T REG [1]

IPTR REG [1]

WPTR REG [1]

BPTR REG [1]

FPTR REG [1]

C REG [1]

B REG [1]

A REG [1]

O REG [1]

SNP FLAG [1]

COPY FLAG [1]

DECODER

EP 0 183 877 B1

TIMER REQUEST 0

TIMER REQUST 1

CLOCK  87

CONDITION MULTIPLEXOR  36

MIR'  37

MICRO INSTRUCTION ROM  13

41

REGISTER BANK SELECTOR  45

REGISTER TO BUS CONTROL SWITCHES  32

INSERT FLAG [1]  82

DELETE FLAG [1]  83

VALID TIME FLAG [1]  84

NEXT TIME REG [1]  85

TIMER LOGIC [1]  86

CLOCK REG  81  31

TIME SLICE REG  80  30  48

ALU

PROC. PRI FLAG

PRI FLAG  47

PROC DESC REG  46

PROC PTR REG

TEMP REG  44

CONSTANTS BOX  40

Y BUS

X BUS

Z BUS
DATA BUS

*Fig. 2B.*

3

Fig. 3.

Fig.4.

LIST OF PRIORITY 0
PROCESSES
WORK SPACE OF PROCESS L

| ADDRESS | CONTENTS |
|---|---|
| 10300 | CHANNEL |

70

| | |
|---|---|
| 10202 | VECTOR VARIABLE 2 |
| 10201 | VECTOR VARIABLE 1 |
| 10200 | VECTOR VARIABLE 0 |

60

| | |
|---|---|
| 10100 | VARIABLE N |
| | |
| | |

PRIORITY [0]
REGISTERS

54

| A REG [0] |
|---|
| B REG [0] |
| C REG [0] |
| WPTR REG [0] |
| IPTR REG [0] |
| O REG [0] |

55
56
51
50
57

| F PTR REG [0] |
|---|
| B PTR REG [0] |

53
52

| 10002 | VARIABLE 2 |
|---|---|
| 10001 | VARIABLE 1 |
| 10000 | VARIABLE 0 |
| 9999 | IPTR S |
| 9998 | LINK S |
| 9997 | STATE S |
| 9996 | T LINK S |
| 9995 | TIME S |

65
66
67
68
69

M

61

N

62

O

63

PROGRAM

181

Fig.5.

Fig. 6.

TIMER LIST PRIORITY [1]
PROCESS WORK SPACES

PROGRAM

T — VARIABLE 0 — TIME
U — VARIABLE 0 — TIME
V — VARIABLE 0 — NOT PROCESS P — TIME

VALID TIMER FLAG [1]
TPTR [1]
MEMORY WORD
NEXT TIME REG [1]

Fig. 7.

TIMER LIST PRIORITY [0]
PROCESS WORK SPACES

VALID TIMER FLAG [0]

84

1

TPTR [0]

MEMORY WORD

90

NEXT TIME REG
[0]

85

W

VARIABLE 0

65

66

67

68

69

TIME

X

VARIABLE 0

65

66

67

68

69

TIME

Y

VARIABLE 0

65

66

67

68

68

NOT PROCESS P

TIME

PROGRAM

181

EP 0 183 877 B1

8

Fig. 8.

EP 0 183 877 B1

TPTR 1 | NOT PROCESS P | 90

WPTR 1 | WPTR X
A REG 1 | 30
CLOCK REG | 20
VALID TIME FLAG1 | 0

51
65
54 81 66

WORKSPACE PROCESS | 60
X
O LOCATION

67
68

84

*Fig. 9A.* 69

90

TPTR 1 | WPTR X

WPTR1 | NOT PROCESS P
NEXT TIME REG 1 | 31
CLOCK REG | 22
VALID TIME FLAG1 | 1

51
85
81
84

WORKSPACE PROCESS | 60
X
O LOCATION
IPTR X

65
67
68

WAITING P
NOT PROCESS P | 69
31

*Fig. 9B.*

90

TPTR1 | WPTR X

WPTR1 | NOT PROCESS P
NEXT TIME REG 1 | 31
CLOCK REG | 31
VALID TIME FLAG1 | 1

51

WORKSPACE PROCESS | 60
X
O LOCATION
IPTR X

WAITING P
NOT PROCESS P
31

*Fig. 9C.*

90

TPTR1 | NOT PROCESS P

WPTR1 | WPTR X
NEXT TIME REG1 | 31
CLOCK REG | 33
VALID TIME FLAG1 | 0

51

WORKSPACE PROCESS | 60
X
O LOCATION

READY P
TIME SET P
31

*Fig. 9D.*

10

*Fig.10A.*

| WORKSPACE PROCESS P | 60 |
|---|---|
| 0 LOCATION | 65 |
| | 66 |
| · | 67 |
| | 68 |
| | 69 |

WPTR REG1 | WPTR P | 51

TPTR 1 | WPTR X |
90

| WORKSPACE PROCESS X | 60 |
|---|---|
| 0 LOCATION | |
| IPTR X | |
| | |
| WAITING P | |
| WPTR Y | |
| 25 | |

A REG1 | ·27 |
54

B REG1 | |
55

| WORKSPACE PROCESS Y | 60 |
|---|---|
| 0 LOCATION | |
| IPTR ·Y | |
| | |
| WAITING P | |
| WPTR Z | |
| 26 | |

C REG1 | |
56

CLOCK REG | 20 |
81

VALID TIME FLAG 1 | 1 |
84

| WORKSPACE PROCESS Z | 60 |
|---|---|
| 0 LOCATION | |
| IPTR Z | |
| | |
| WAITING P | |
| NOT PROCESS P | |
| 29 | |

NEXT TIME REG1 | 25 |
85

## Fig.10B.

WPTR REG 1 | WPTR P |

TPTR 1 | WPTR X |

A REG 1 | 28 |

B REG 1 | TPTR LOC 1 |

C REG 1 | WPTR X |

CLOCK REG | 21 |

VALID TIME FLAG 1 | 1 |

NEXT TIME REG 1 | 25 |

WORKSPACE PROCESS P — 60

| 0 LOCATION |
| WAITING P |
| 28 |

WORKSPACE PROCESS X — 60

| 0 LOCATION |
| IPTR X |
| WAITING P |
| WPTR Y |
| 25 |

WORKSPACE PROCESS Y — 60

| 0 LOCATION |
| IPTR Y |
| WAITING P |
| WPTR Z |
| 26 |

WORKSPACE PROCESS Z — 60

| 0 LOCATION |
| IPTR Z |
| WAITING P |
| NOT PROCESS P |
| 29 |

## Fig.10C.

WPTR REG1 | WPTR  P

TPTR 1 | WPTR  X

A REG1 | 28

B REG1 | T LINK  X

C REG1 | WPTR  Y

CLOCK REG | 22

VALID TIME FLAG1 | 1

NEXT TIME REG1 | 25

WORKSPACE PROCESS P | 60
0  LOCATION
WAITING  P
28

WORKSPACE PROCESS X | 60
0  LOCATION
IPTR  X
WAITING  P
WPTR  Y
25

WORKSPACE PROCESS Y | 60
0  LOCATION
IPTR  Y
WAITING  P
WPTR  Z
26

WORKSPACE PROCESS Z | 60
0  LOCATION
IPTR  Z
WAITING  P
NOT PROCESS  P
29

*Fig.10D.*

WPTR REG 1 | WPTR P

TPTR 1 | WPTR X

A REG 1 | 28

B REG 1 | T LINK Y

C REG 1 | WPTR Z

CLOCK REG | 23

VALID TIME FLAG 1 | 1

NEXT TIME REG 1 | 25

*60*

| WORKSPACE PROCESS P |
|---|
| 0 LOCATION |
| |
| |
| WAITING P |
| |
| 28 |

*60*

| WORKSPACE PROCESS X |
|---|
| 0 LOCATION |
| IPTR X |
| |
| WAITING P |
| WPTR Y |
| 25 |

*60*

| WORKSPACE PROCESS Y |
|---|
| 0 LOCATION |
| IPTR Y |
| |
| WAITING P |
| WPTR Z |
| 26 |

*60*

| WORKSPACE PROCESS Z |
|---|
| 0 LOCATION |
| IPTR Z |
| |
| WAITING P |
| NOT PROCESS P |
| 29 |

## Fig.10E.

WORKSPACE PROCESS
P — 60

| 0 LOCATION |
| IPTR P |
| |
| WAITING P |
| WPTR Z |
| 28 |

WPTR REG1 | WPTR P

TPTR 1 | WPTR X

A REG1 | 28

WORKSPACE PROCESS
X — 60

| 0 LOCATION |
| IPTR X |
| |
| WAITING P |
| WPTR Y |
| 25 |

B REG1 |

C REG1 |

WORKSPACE PROCESS
Y — 60

| 0 LOCATION |
| IPTR Y |
| |
| WAITING P |
| WPTR P |
| 26 |

CLOCK REG | 24

VALID TIME
FLAG1 | 1

NEXT TIME
REG1 | 25

WORKSPACE PROCESS
Z — 60

| 0 LOCATION |
| IPTR Z |
| |
| WAITING P |
| NOT PROCESS P |
| 29 |

*Fig.11A.*

60

| WORKSPACE PROCESS X |
|---|
| 0 LOCATION |
| |
| |
| ENABLING P |
| TIME NOT SET P |
| |

67
68
69

*Fig.11B.*

60

| WORKSPACE PROCESS X |
|---|
| 0 LOCATION |
| |
| |
| ENABLING P |
| TIME SET P |
| 26 |

67
68
69

*Fig.11C.*

60

| WORKSPACE PROCESS X |
|---|
| 0 LOCATION |
| |
| |
| ENABLING P |
| TIME SET P |
| 25 |

67
68
69

## Fig. 12A.

```
                              51                        WORKSPACE    60
                                                        PROCESS  P
WPTR REG 1 [    WPTR  P    ] - - - - - - - - →  [      -1       ]
   TPTR 1 [ NOT PROCESS P ] ⌐90               [               ]
CLOCK REG [      31       ] ⌐81          67⌐  [               ]
                                              [   READY  P    ]
VALID TIME FLAG 1 [   0   ] ⌐84          68⌐  [   TIME SET P  ]
                                         69⌐  [      30       ]
```

## Fig. 12B.

```
WPTR  REG 1 [    WPTR  P     ] - - - - - ┐
   TPTR 1 [ NOT  PROCESS P ]   ⌐54       │      WORKSPACE    60
   A REG 1 [ CODE OFFSET  1 ]             │      PROCESS  P
                              ⌐55       └ - →  [      -1       ]
   B  REG 1 [ MACHINE  TRUE ]                 [               ]
                              ⌐56             [               ]
   C  REG 1 [      26       ]                 [   READY  P    ]
CLOCK  REG [      32       ]                  [   TIME SET  P  ]
VALID TIME FLAG 1 [   0   ]                   [      30       ]
```

## Fig. 12C.

```
                                              WORKSPACE    60
                                              PROCESS  P
WPTR REG 1 [    WPTR   P    ] - - - - - - - → [ CODE OFFSET 1 ]
   TPTR 1 [ NOT  PROCESS P ]                  [               ]
   A REG 1 [ MACHINE TRUE ]                   [   READY   P   ]
CLOCK REG [      33       ]                   [   TIME  SET P  ]
VALID TIME FLAG 1 [   0   ]                   [      30       ]
```

*Fig. 13A.*

WORKSPACE P $60$

| | |
|---|---|
| WPTR REG 1 | NOT PROCESS P $51$ |
| TPTR 1 | WPTR P $90$ |
| CLOCK REG | 11 $81$ |
| VALID TIME FLAG 1 | 1 $84$ |
| NEXT TIME REG 1 | 26 $85$ |

WORKSPACE P
−1
IPTR P
$67$ WAITING P
$68$ NOT PROCESS P
$69$ 26

*Fig. 13B.*

WORKSPACE P $60$

| | |
|---|---|
| WPTR REG 1 | NOT PROCESS P |
| TPTR 1 | WPTR P |
| CLOCK REG | 26 |
| VALID TIME FLAG 1 | 1 |
| NEXT TIME REG 1 | 26 |

WORKSPACE P
−1
IPTR P

WAITING P
NOT PROCESS P
26

*Fig. 13C.*

WORKSPACE P $60$

| | |
|---|---|
| WPTR REG 1 | WPTR P |
| TPTR 1 | NOT PROCESS P |
| CLOCK REG | 27 |
| VALID TIME FLAG 1 | 0 |

WORKSPACE P
−1

READY P
TIME SET P
26

## Fig. 13D.

| | | 60 |
|---|---|---|
| WPTR REG 1 | WPTR P | WORKSPACE P |
| TPTR 1 | NOT PROCESS P | −1 |
| A REG 1 | CODE OFFSET 1 | |
| B REG 1 | MACHINE TRUE 1 | |
| C REG 1 | 26 | READY P |
| CLOCK REG | 28 | TIME SET P |
| VALID TIME FLAG 1 | 0 | 26 |

## Fig. 13E.

| | | 60 |
|---|---|---|
| WPTR REG 1 | WPTR P | WORKSPACE P |
| TPTR 1 | NOT PROCESS P | −1 |
| A REG 1 | CODE OFFSET 2 | |
| B REG 1 | MACHINE TRUE | |
| C REG 1 | 25 | READY P |
| CLOCK REG | 30 | TIME SET P |
| VALID TIME FLAG 1 | 0 | 26 |

## Fig. 13F.

| | | 60 |
|---|---|---|
| | | WORKSPACE P |
| WPTR REG 1 | WPTR P | CODE OFFSET 2 |
| TPTR 1 | NOT PROCESS P | |
| A REG 1 | MACHINE TRUE | |
| CLOCK REG | 31 | READY P |
| VALID TIME FLAG 1 | 0 | TIME SET P |
| | | 26 |

## Fig. 14A.

WPTR REG 1 | WPTR | _51_

TPTR 1 | NOT PROCESS P | _90_

A REG 1 | MACHINE TRUE | _54_

B REG 1 | CHANNEL | _55_

CLOCK REG | 10 | _81_

VALID TIME FLAG 1 | 0 | _84_

_60_

WORKSPACE
P

0 LOCATION

_67_ ENABLING P

_68_ TIME SET P

_69_ 40

## Fig. 14B.

WPTR REG 1 | WPTR P

TPTR 1 | NOT PROCESS P

CLOCK REG | 11

VALID TIME FLAG 1 | 0

_60_

WORKSPACE
P

0 LOCATION

READY P

TIME SET P

40

## Fig. 14C.

| | | |
|---|---|---|
| WPTR REG 1 | WPTR | |
| TPTR 1 | NOT PROCESS P | |
| CLOCK REG | 12 | |
| VALID TIME FLAG 1 | 0 | |

60

| WORKSPACE PROCESS P |
|---|
| −1 |
| |
| |
| READY P |
| TIME SET P |
| 12 |

## Fig. 14D.

| | | |
|---|---|---|
| WPTR REG 1 | WPTR P | |
| TPTR 1 | NOT PROCESS P | |
| A REG 1 | CODE OFFSET 1 | |
| B REG 1 | MACHINE TRUE | |
| C REG 1 | 40 | |
| CLOCK REG | 15 | |
| VALID TIME FLAG 1 | 0 | |

60

| WORKSPACE PROCESS P |
|---|
| −1 |
| |
| |
| READY P |
| TIME SET P |
| 12 |

21

## Fig.15A.

## Fig.15B.

CHANNEL | PROC DESC P — — →

WORKSPACE PROCESS
P
-1
IPTR P

WAITING P
WPTR Y
41

WPTR REG 1 | NOT PROCESS P

TPTR 1 | WPTR X — — →

WORKSPACE PROCESS
X
0 LOCATION
IPTR X

WAITING P
WPTR P
35

A REG 1

B REG 1

C REG 1

CLOCK REG | 13

VALID TIME FLAG 1 | 1

NEXT TIME REG 1 | 35

WORKSPACE PROCESS
Y
0 LOCATION
IPTR Y

WAITING P
NOT PROCESS P
55

## Fig.15C.

WPTR REG 1 | WPTR P

TPTR 1 | WPTR X

A REG 1 | CODE OFFSET 1

B REG 1 | MACHINE TRUE

C REG 1 | 40

CLOCK REG | 20

VALID TIME FLAG 1 | 1

NEXT TIME REG 1 | 35

**WORKSPACE PROCESS P** — 60
- -1
- READY P
- WPTR Y
- 41

**WORKSPACE PROCESS X** — 60
- 0 LOCATION
- IPTR X
- WAITING P
- WPTR P
- 35

**WORKSPACE PROCESS Y** — 60
- 0 LOCATION
- IPTR Y
- WAITING P
- NOT PROCESS P
- 55

## Fig.15D.

DELETE FLAG 1=1

WPTR REG 1 | WPTR P

TPTR 1 | . WPTR X

A REG 1 | MACHINE FALSE

B REG 1 | TPTR 1

C REG 1 | WPTR X

CLOCK REG | 21

VALID TIME FLAG 1 | 1

NEXT TIME REG 1 | 35

**WORKSPACE PROCESS P** — 60
| |
|---|
| -1 |
| |
| READY P |
| WPTR Y |
| 41 |

**WORKSPACE PROCESS X** — 60
| |
|---|
| 0 LOCATION |
| IPTR X |
| |
| WAITING P |
| WPTR P |
| 35 |

**WORKSPACE PROCESS Y** — 60
| |
|---|
| 0 LOCATION |
| IPTR Y |
| |
| WAITING P |
| NOT PROCESS P |
| 55 |

# Fig.15E.

DELETE FLAG 1=1

WORKSPACE PROCESS P    60

| | |
|---|---|
| | -1 |
| | |
| | |
| | |
| | READY P |
| | WPTR Y |
| | 41 |

WPTR REG 1 | WPTR P

TPTR 1 | WPTR X

A REG 1 | MACHINE FALSE

B REG 1 | T LINK X

C REG 1 | WPTR P

WORKSPACE PROCESS X    60

| | |
|---|---|
| | 0 LOCATION |
| | IPTR X |
| | |
| | WAITING P |
| | WPTR P |
| | 35 |

CLOCK REG | 22

VALID TIME FLAG 1 | 1

NEXT TIME REG 1 | 35

WORKSPACE PROCESS Y    60

| | |
|---|---|
| | 0 LOCATION |
| | IPTR Y |
| | |
| | WAITING P |
| | NOT PROCESS P |
| | 55 |

## Fig.15F.

DELETE FLAG 1=0

WPTR REG 1 | WPTR P

TPTR 1 | WPTR X

A REG 1 | MACHINE FALSE

B REG 1

C REG 1

CLOCK REG | 23

VALID TIME FLAG 1 | 1

NEXT TIME REG 1 | 35

60

| WORKSPACE PROCESS P. |
| --- |
| -1 |
| |
| |
| READY P |
| TIME NOT SET P |
| 41 |

60

| WORKSPACE PROCESS X |
| --- |
| 0 LOCATION |
| IPTR X |
| |
| WAITING P |
| WPTR Y |
| 35 |

60

| WORKSPACE PROCESS Y |
| --- |
| 0 LOCATION |
| IPTR Y |
| |
| WAITING P |
| NOT PROCESS P |
| 55 |